# EUROPEAN PATENT APPLICATION

(11) **EP 4 679 377 A1**
(43) Date of publication of application: **14.01.2026**
(21) Application number: 24809998.8
(22) Date of filing: 29.02.2024
(51) Int. Cl.: G06T 11/60

(54) **METHOD FOR EDITING DYNAMIC PHOTOGRAPH, AND RELATED APPARATUS**

(30) Priority: 24.05.2023 CN 202310598069
(71) Applicant: Honor Device Co., Ltd., Shenzhen, Guangdong 518040 (CN)
(72) Inventor: ZHANG, Jie, Shenzhen, Guangdong 518040 (CN)
(74) Representative: Isarpatent
(86) International application number: PCT/CN2024/079176
(87) International publication number: WO 2024/239749

(57) **Abstract**

A method for editing a moving photo and a related apparatus are provided. The method includes: An electronic device displays a first user interface, where the first user interface displays thumbnails of N image frames and a full-size image of a first image frame that are included in a moving photo, the first image frame is an image frame in the N image frames; the electronic device refreshes the full-size image of the first image frame to display as a full-size image of a second image frame when the electronic device detects an operation of selecting a thumbnail of the second image frame from the thumbnails of the N image frames by a user; the electronic device displays a second user interface when the electronic device detects an operation of editing the second image frame by the user, where the second user interface displays a full-size image of an edited second image frame and a first control; and the electronic device displays the first user interface again when the electronic device detects an operation of tapping the first control by the user. In the technical solution provided in this application, a user can efficiently, quickly, continuously edit an image frame in the moving photo in the electronic device.

## Description

This application claims priority to Chinese Patent Application No. 202310598069.8, filed with the China National Intellectual Property Administration on May 24, 2023 and entitled "METHOD FOR EDITING MOVING PHOTO AND RELATED APPARATUS", which is incorporated herein by reference in its entirety.

### TECHNICAL FIELD

The present invention relates to the field of electronic technologies and image processing, and in particular, to a method for editing a moving photo and a related apparatus.

### BACKGROUND

At present, more electronic devices can take and store moving photos. The moving photo includes a plurality of image frames. The electronic device may display the moving photo and the plurality of image frames included in the moving photo.

However, in the conventional technology, the electronic device displays an editing interface of a still photo after the electronic device edits any image frame in the moving photo. When a user wants to continue to edit the image frame in the moving photo, the user needs to perform operations in the editing interface of the still photo. As a result, the electronic device returns to a thumbnail display interface of a gallery application, and then the user performs operations in the thumbnail display interface. This enables the electronic device to display a full-size image display interface. Finally, the electronic device can return to the interface for editing the image frame in the moving photo again only after the user performs operations in the full-size image display interface. As a result, the operations are complex and user experience is poor.

### SUMMARY

Embodiments of this application provide a method for editing a moving photo and a related device. The method for editing a moving photo is implemented, so that a user can edit an image frame in a moving photo, and can also reset an editing interface of the image frame to an editing interface of the moving photo after editing the image frame. The user may select another image frame for continuous editing in the editing interface of the moving photo. After the user edits the image frame, an electronic device may further store an edited image frame as a still photo in a gallery.

According to a first aspect, this application provides a method for editing a moving photo. The method for editing a moving photo includes: an electronic device displays a first user interface, where the first user interface displays thumbnails of N image frames and a full-size image of a first image frame that are included in a moving photo, the first image frame is an image frame in the N image frames, and the thumbnails of the N image frames are in a selectable state; the electronic device refreshes the full-size image of the first image frame to display as a full-size image of a second image frame when the electronic device detects an operation of selecting a thumbnail of the second image frame from the thumbnails of the N image frames by a user; the electronic device displays a second user interface when the electronic device detects an operation of editing the second image frame by the user, where the second user interface displays a full-size image of an edited second image frame and a first control, and the second user interface includes the thumbnails of the N image frames, but the thumbnails of the N image frames are in a non-selectable state; and the electronic device displays the first user interface again when the electronic device detects an operation of tapping the first control by the user.

In this way, a user may edit the image frame in the moving photo, and may reset the editing interface of the image frame to the editing interface of the moving photo after editing the image frame. To be specific, the first control is disposed in the second user interface, so that the user may quickly return, through the first control, to the first user interface, that is, may quickly return to the editing interface of the moving photo. Because the editing interface of the moving photo includes the thumbnails of the N image frames included in the moving photo, the user may quickly select another image frame in the moving photo again for editing, thereby improving interaction efficiency in a scenario of editing the image frame in the moving photo.

With reference to the first aspect, in a possible implementation, before an electronic device displays a first user interface, the method may further include: the electronic device displays a thumbnail display interface of a gallery application, where the thumbnail display interface is configured to display thumbnails of a plurality of photos stored in the gallery application, and the thumbnails of the plurality of photos include a thumbnail of the moving photo; and the electronic device displays a full-size image display interface when the electronic device detects an operation of tapping the thumbnail of the moving photo by the user, where the full-size image display interface displays a full-size image of a cover picture of the moving photo; and
that the electronic device displays the first user interface includes: the electronic device displays the first user interface when the electronic device detects an operation of displaying the moving photo in the full-size image display interface by the user.

In this way, the user may open the moving photo in the gallery application.

With reference to the first aspect, in a possible implementation, before an electronic device displays a first user interface, the method may further include: the electronic device stores, as a video, at least one image frame cached before a moment at which a shutter operation is performed, and stores, as videos, at least one image frame cached at the moment at which the shutter operation is performed and at least one image frame cached after the moment at which the shutter operation is performed; the electronic device stores, as a still photo, an image frame captured at the moment at which the shutter operation is performed; and the electronic device generates the moving photo based on the video and the still photo, where the still photo is the cover picture of the moving photo. In this way, the user may take the moving photo.

With reference to the first aspect, in a possible implementation, the first image frame is an image frame corresponding to the cover picture of the moving photo, or an image frame previously selected by the user for editing.

With reference to the first aspect, in a possible implementation, the first user interface further displays a first function option, the first function option is in a first state, and the first state may be used to indicate that a photo displayed in the first user interface is the moving photo; and the second user interface further displays the first function option, the first function option is in a second state, and the second state is used to indicate that a photo displayed in the second user interface is the still photo. In this way, the user may know, based on a status of the first function option, whether a photo in the user interface is a moving photo or a still photo.

With reference to the first aspect, in a possible implementation, that the electronic device displays a second user interface when the electronic device detects an operation of editing the second image frame by the user may include: the electronic device displays a third user interface when the electronic device detects the operation of editing the second image frame by the user, where the third user interface displays the first function option, the first function option is in the second state, the second state is used to indicate that a photo displayed in the third user interface is the still photo, and the third user interface does not include the thumbnails of the N image frames; and the electronic device displays the second user interface when the electronic device detects an operation of tapping the first function option in the third user interface by the user.

With reference to the first aspect, in a possible implementation, that the second user interface further includes a second control, and after the electronic device displays a second user interface when the electronic device detects an operation of editing the second image frame by the user, the method may further include: the electronic device stores the edited second image frame as a first still photo in the gallery application when the electronic device detects an operation of tapping the second control by the user. In this way, the electronic device may store the edited second image frame as the first still photo in the gallery application.

With reference to the first aspect, in a possible implementation, that the third user interface further includes a third control, and the method may further include: the electronic device stores the edited second image frame as the first still photo in the gallery application, and displays a full-size image display interface of the gallery application when the electronic device detects an operation of tapping the third control by the user, where the full-size image display interface displays a full-size image of the first still photo. In this way, the electronic device may directly return to the full-size image display interface of the gallery application. This facilitates the user to view the edited second image frame in the full-size image display interface.

With reference to the first aspect, in a possible implementation, that after the electronic device stores the edited second image frame as the first still photo in the gallery application, and displays a full-size image display interface of the gallery application when the electronic device detects an operation of tapping the third control by the user, the method may further include: the electronic device displays the thumbnail display interface when the electronic device detects an operation of tapping a return control in the full-size image display interface by the user, where the thumbnail display interface includes a thumbnail of a newly generated first still photo. In this way, the electronic device may directly return to the thumbnail display interface of the gallery application. This facilitates the user to view, in the thumbnail display interface, the thumbnail of the newly generated first still photo, and facilitates the user to perform subsequent operations in the thumbnail display interface of the gallery application.

With reference to the first aspect, in a possible implementation, the first user interface further includes a fourth control and a fifth control, and the fourth control is configured to set an image frame selected by the user from the N image frames as the cover picture of the moving photo; and the fifth control is configured to store the image frame selected by the user from the N image frames as a still photo in the gallery application. In this way, the user may change the cover picture of the moving photo according to personal fancy, and store favorite image frames as still photos.

With reference to the first aspect, in a possible implementation, after the electronic device refreshes the full-size image of the first image frame to display as a full-size image of a second image frame when the electronic device detects an operation of selecting a thumbnail of the second image frame from the thumbnails of the N image frames by a user, the method may further include: the electronic device sets the second image frame as the cover picture of the moving photo when the electronic device detects an operation of tapping the fourth control by the user; and the electronic device displays the thumbnail display interface of the gallery application again, and updates, in the thumbnail display interface, a thumbnail of the moving photo that is after the cover photo. In this way, after replacing the cover picture of the moving photo, the user may further view the thumbnail of the moving photo in the gallery after the cover photo is updated.

With reference to the first aspect, in a possible implementation, that the electronic device refreshes the full-size image of the first image frame to display as a full-size image of a second image frame when the electronic device detects an operation of selecting a thumbnail of the second image frame from the thumbnails of the N image frames by a user, the method may further include: the electronic device stores the second image frame as a second still photo in the gallery application when the electronic device detects an operation of tapping the fifth control by the user. In this way, the user may store the favorite image frames as the still photos.

With reference to the first aspect, in a possible implementation, the electronic device sets the fourth control to be in an unavailable state when the electronic device detects that the image frame selected by the user is the cover picture of the moving photo.

With reference to the first aspect, in a possible implementation, the first user interface displays a first indicator, and the first indicator is used to indicate that the first image frame is the cover picture of the moving photo.

With reference to the first aspect, in a possible implementation, after the electronic device sets the second image frame as the cover picture of the moving photo when the electronic device detects an operation of tapping the fourth control by the user, the method may further include: the electronic device displays a second indicator, where the second indicator is used to indicate that the second image frame is the cover picture of the moving photo.

With reference to the first aspect, in a possible implementation, the method may further include: the electronic device stops displaying the first indicator or a third indicator, where the third indicator is used to indicate that the first image frame is a cover picture automatically selected by the electronic device for the moving photo but that the first image frame is not currently the cover picture of the moving photo.

With reference to the first aspect, in a possible implementation, time information of the first still photo stored by the electronic device is consistent with a photographing time of the moving photo; and time information of the second still photo stored by the electronic device is consistent with the photographing time of the moving photo.

With reference to the first aspect, in a possible implementation, the thumbnail of the moving photo displayed in the thumbnail display interface of the gallery application includes a first icon, and the first icon is used to indicate that a photo corresponding to the thumbnail is the moving photo.

With reference to the first aspect, in a possible implementation, the thumbnails of the N image frames are arranged in the first user interface in a photographing time sequence of the N image frames.

According to a second aspect, an electronic device is provided, where the electronic device includes one or more camera lenses, one or more processors, and one or more memories, where the one or more camera lenses and the one or more memories are coupled to the one or more processors, the one or more memories are configured to store computer program code, the computer program code includes computer instructions, and when the one or more processors execute the computer instructions, the electronic device is enabled to perform the method according to any possible implementation of the first aspect.

According to a third aspect, a chip system is provided, where the chip system is applied to an electronic device, the chip system includes one or more processors, and the processor is configured to invoke computer instructions, to enable the electronic device to perform the method according to any possible implementation of the first aspect.

According to a fourth aspect, a computer-readable storage medium is provided, where the computer-readable storage includes instructions, and when the instructions are run on an electronic device, the electronic device is enabled to perform the method according to any possible implementation of the first aspect.

According to a fifth aspect, a computer program product is provided, where when the computer program product is run on an electronic device, the electronic device is enabled to perform the method according to any possible implementation of the first aspect.

### BRIEF DESCRIPTION OF DRAWINGS

FIG. 1 is a schematic diagram of a thumbnail display interface of a gallery application of an electronic device according to an embodiment of this application;
FIG. 2 to FIG. 4 are schematic diagrams of a full-size image display interface of a gallery application of an electronic device according to an embodiment of this application;
FIG. 5A to FIG. 9 are schematic diagrams of an editing interface of a set of moving photos of an electronic device according to an embodiment of this application;
FIG. 10 to FIG. 12 are schematic diagrams of an editing interface of a set of still photos of an electronic device according to an embodiment of this application;
FIG. 13 is a schematic diagram of a full-size image display interface of a gallery application of an electronic device according to an embodiment of this application;
FIG. 14A to FIG. 16 are schematic diagrams of an editing interface of a set of moving photos of an electronic device according to an embodiment of this application;
FIG. 17 to FIG. 24 are schematic diagrams of an editing interface of a set of still photos of an electronic device according to an embodiment of this application;
FIG. 25 is a schematic diagram of an editing interface of a moving photo of an electronic device according to an embodiment of this application;
FIG. 26 is a schematic diagram of an editing interface of a still photo of an electronic device according to an embodiment of this application;
FIG. 27 is a schematic diagram of a full-size image display interface of a gallery application of an electronic device according to an embodiment of this application;
FIG. 28 is a schematic diagram of a thumbnail display interface of a gallery application of an electronic device according to an embodiment of this application;
FIG. 29 is a schematic flowchart of a method for editing a moving photo according to an embodiment of this application; and
FIG. 30 is a schematic diagram of a structure of an electronic device according to an embodiment of this application.

### DESCRIPTION OF EMBODIMENTS

Terms used in the following embodiments of this application are only intended to describe particular embodiments, and are not intended to limit this application. The singular expressions "one", "one type of", "the", "the foregoing", "that", and "this" used in this specification and the appended claims of this application are also intended to include plural expressions, unless otherwise specified in the context clearly. It should be further understood that the term "and/or" used in this application indicates and includes any or all possible combinations of one or more listed items.

In the following, the terms "first" and "second" are only used for description purposes, and cannot be understood as indicating or implying relative importance or implicitly indicating a quantity of indicated technical features. Therefore, a feature defined to be "first" or "second" may explicitly or implicitly include one or more features. In the descriptions of embodiments of this application, unless otherwise stated, "a plurality of" means two or more than two.

An electronic device may store, as videos, an image frame captured within preset duration (for example, 1.5s) before a user presses a shutter and an image frame captured in preset duration after the user presses the shutter, may store, as a still photo, an image frame captured at a moment at which the user presses the shutter, and may generate a moving photo with the videos and the still photo. The still photo may be used as a cover picture of the moving photo. To be specific, the moving photo stored by the electronic device includes two parts, namely, the cover picture and a video including a plurality of image frames. The moving photo stored by the electronic device includes two files, namely, an image file storing the cover picture and a video file storing the video. The image file and the video file may be associated with each other. For example, file names are the same, but file suffixes are not the same. The video, including the plurality of image frames, of the moving photo may include an image frame corresponding to the cover picture. The cover picture may be the same as the image frame corresponding to the cover picture, or may be obtained by processing the corresponding image frame.

In this embodiment of this application, it is not limited that an image frame captured during a time period before the user presses the shutter and an image frame captured during a time period after the user presses the shutter are stored as videos of the moving photo, or an image frame captured only during a time period before the user presses the shutter (may include a moment at which the user presses the shutter) or only during a time period after the user presses the shutter (may include a moment at which the user presses the shutter) is stored as the video of the moving photo.

The still photo is relative to the moving photo. Generally, the still photo is a still image perceptively presented by the user, rather than a moving image presented as the moving photo. A format of the still photo includes, but is not limited to: a joint photographic experts group (joint photographic experts group, JPEG or JPG for short) format, a protable network graphics (protable network graphics, PNG) format, and the like.

A format of the video file includes, but is not limited to formats as follows: avi, wmv, mpeg, mp4, m4v, mov, asf, flv, f4v, rmvb, rm, 3gp, vo, and the like.

A format of the image file includes, but is not limited to formats as follows: jpg, png, gif, psd, tif, bmp, and the like.

At present, after the electronic device edits an image frame in the moving photo selected by the user, the electronic device displays an editing interface of the still photo. When the user selects another image frame in the moving photo for continuous editing, the electronic device cannot directly return to the editing interface of the moving photo from a convenient interface of the still photo, and the user cannot select a plurality of image frames included in the moving photo for continuous editing on the electronic device. In this case, user experience is poor.

In this embodiment of this application, the cover picture may also be referred to as a cover image, or a cover for short. The electronic device may display a thumbnail of the cover picture in a gallery application (may be a gallery for short below) or an album of the electronic device. The user may tap the thumbnail of the cover picture in the gallery or the album of the electronic device to view a moving photo corresponding to the cover picture.

In this embodiment of this application, the moving photo may also be referred to as a moving picture. The image frame may also be referred to a video frame.

The following describes, with reference to the accompanying drawings, how the user edits the image frame in the moving photo on the electronic device.

In a feasible implementation, the user may set the image frame in the moving photo as the cover picture, and then may edit the image frame that is set as the cover picture. In this way, the user may edit the image frame included in the moving photo.

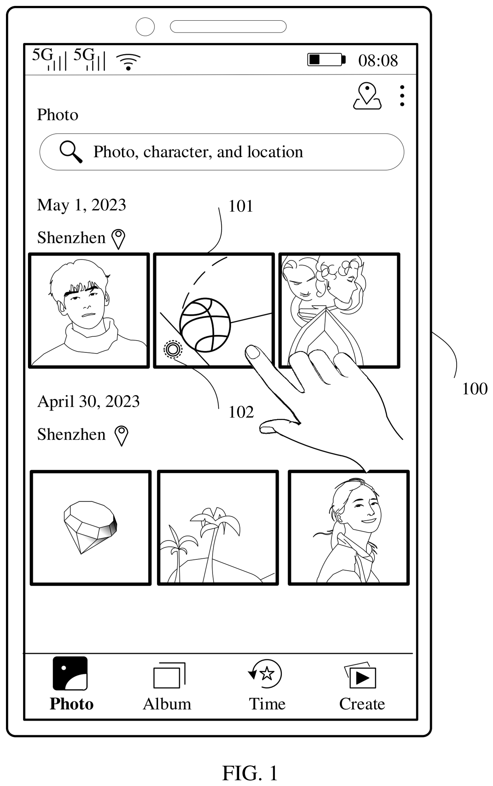

FIG. 1 to FIG. 13 show a process in which an electronic device sets, based on a user operation, an image frame selected by a user from a moving photo as a cover, and then edits the image frame.

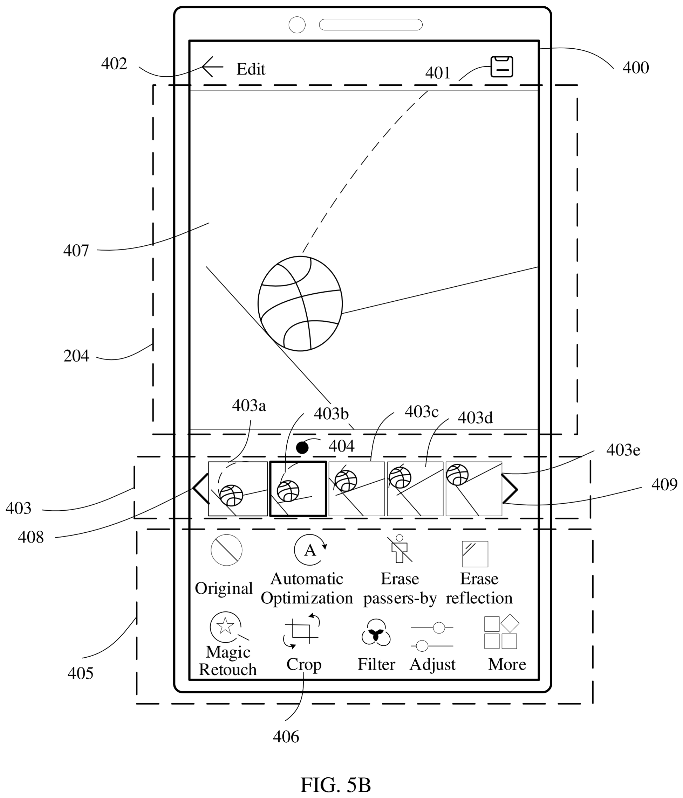

First, the user needs to display a moving photo of which image frame needs to be edited. There may be a plurality of manners for the user to display the moving photo on the electronic device. For example, in a feasible example, the user may tap a thumbnail of the moving photo in an application interface of a gallery, and in response to this operation, the electronic device may display a cover picture of the moving photo. Then, the user taps an "edit" control again, and in response to this operation, the electronic device may display the moving photo. Specifically, refer to description in FIG. 1 to FIG. 5A and FIG. 5B.

Optionally, in another feasible example, the user may tap the thumbnail of the moving photo in the application interface of the gallery, and in response to this operation, the electronic device may display the cover picture of the moving photo. Then, the user taps the "edit" control and a control indicating that a current interface is the moving photo again, and in response to this operation, the electronic device may display the moving photo.

It may be understood that different manufacturers of electronic devices may set different manners of displaying the moving photo. Manners for the user displaying the moving photo on the electronic device are not limited in this embodiment of this application. A manner for opening the moving photo shown in FIG. 1 to FIG. 5A and FIG. 5B is used as an example for description.

FIG. 1 to FIG. 5A and FIG. 5B show the process in which the user displays the moving photo in the gallery of the electronic device.

FIG. 1 shows an example of a user interface 100 of the electronic device. As shown in FIG. 1, the user interface 100 may include thumbnails of a plurality of photos. Specifically, the user interface 100 may include a thumbnail 101 of the cover picture of the moving photo. The thumbnail 101 may include an icon 102. The icon 102 may be used to indicate that a photo corresponding to the thumbnail 101 of the cover picture is the moving photo. A user may tap the thumbnail 101, and in response to this user operation, the electronic device may display a user interface 200.

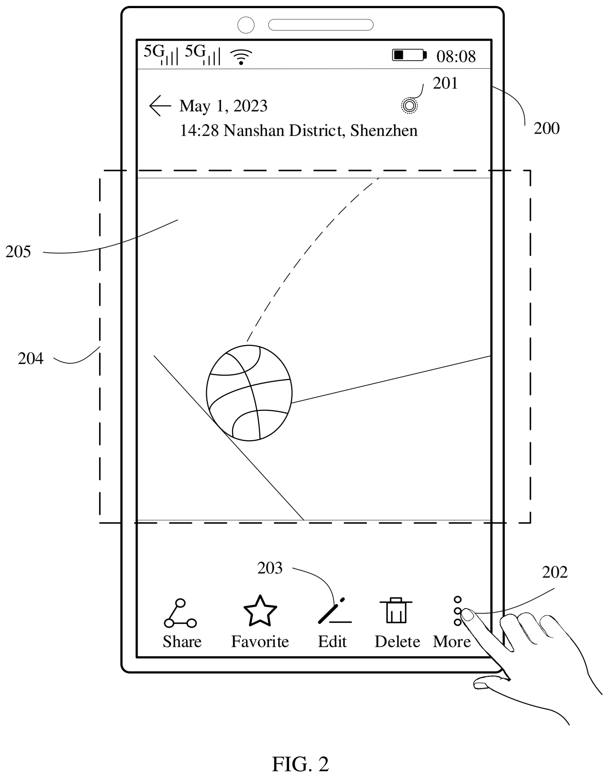

FIG. 2 shows an example of the user interface 200 of the electronic device. As shown in FIG. 2, the user interface 200 may be a preview interface of the moving photo corresponding to the thumbnail 101 of the cover picture. The user interface 200 may include a preview area 204. The preview area 204 may be used to display a cover picture 205. The user interface 200 may further include an icon 201. The icon 201 may be used to indicate that the user interface 200 is the preview interface of the moving photo and that a photo displayed in the user interface 200 is the moving photo.

The cover picture 205 is the cover photo corresponding to the thumbnail 101 shown in FIG. 1.

In some feasible examples, the electronic device may play back a complete moving photo when the user taps the icon 201 or long presses the preview area 204. That is, the electronic device may play back all image frames included in the moving photo.

As shown in FIG. 2, the user interface 200 may further include a plurality of function options such as a function option 202 for viewing more function options, and a function option for sharing, a function option 203 for editing, a function option for favoriting, a function option for deleting, and the like. The user may tap the function option 202, and in response to this user operation, the electronic device may display a user interface 300.

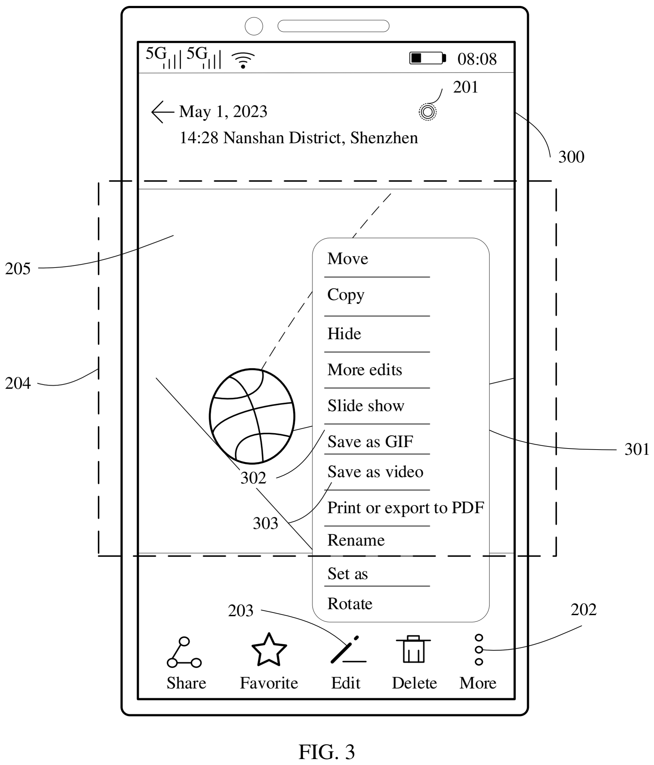

FIG. 3 shows an example of the user interface 300 of the electronic device. As shown in FIG. 3, the user interface 300 may include a menu bar 301. The menu bar 301 may be used to display the plurality of function options such as a function option 302 for storing a photo displayed in the preview area 204 as a format of GIF, a function option 303 for storing the photo displayed in the preview area 204 as a video, and a function option for moving the photo displayed in the preview area 204.

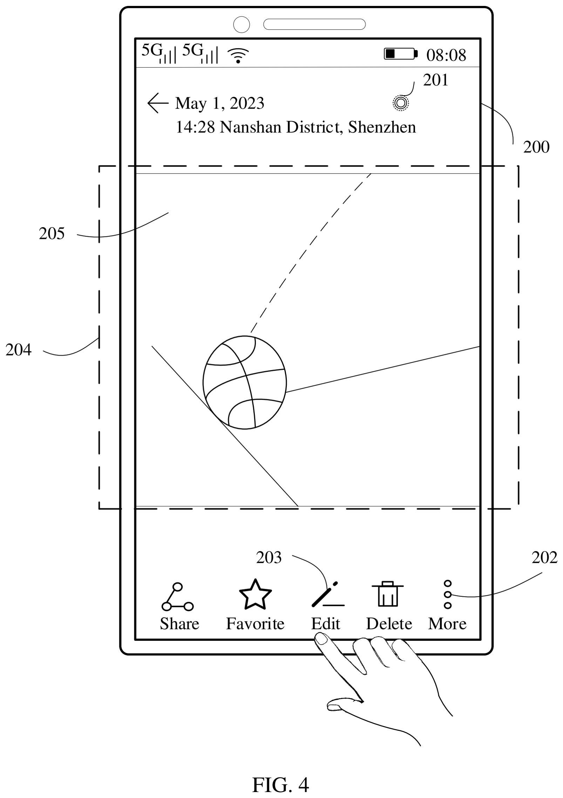

As shown in FIG. 4, the user may tap the function option 203 in the user interface 200, and in response to this user operation, the electronic device may display a user interface 400.

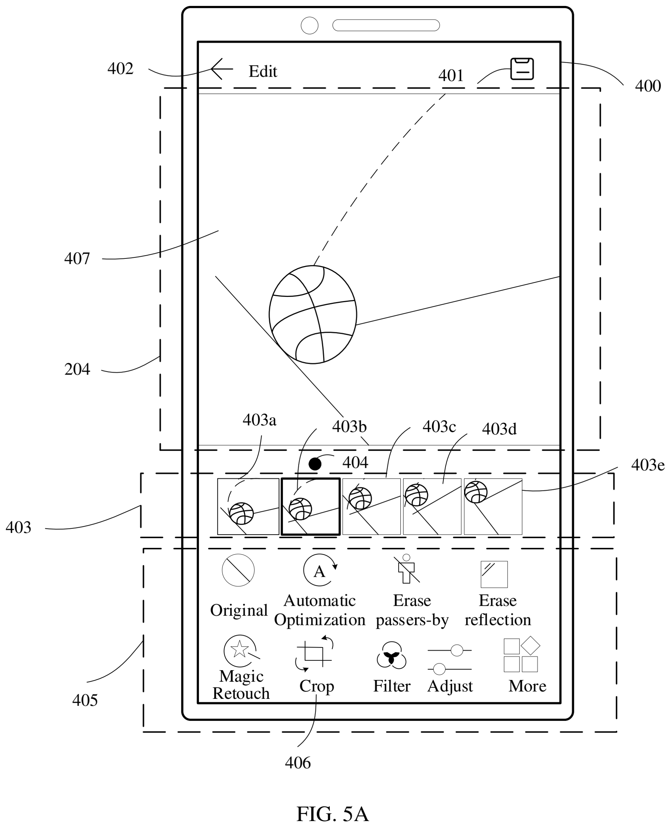

For example, FIG. 5A shows an example of the user interface 400 of the electronic device. The user interface 400 may be referred to as an editing interface of the moving photo corresponding to the thumbnail 101 of the cover picture. As shown in FIG. 4, the user interface 400 may include a preview area 204, a control 401, a control 402, a display area 403, an indicator 404, and an editing function area 405. The preview area 204 may display a preview picture 407 (may also be referred to as a preview image) of an image frame 403b. After replacing the cover picture of the moving photo, the user may tap the control 401 to store the moving photo obtained after the cover picture is replaced. The control 402 may be used to return to an upper-level interface. The display area 403 may be used to display a plurality of image frames included in the moving photo corresponding to the cover picture 205, such as an image frame 403a, an image frame 403b, an image frame 403c, an image frame 403d, and an image frame 403e. The indicator 404 may be used to indicate that a specific image frame in the moving photo is an image frame corresponding to the cover picture of the moving photo. For example, the indicator 404 indicates that the image frame 403b is the image frame corresponding to the cover picture of the moving photo. The preview picture 407 of the image frame 403b is currently displayed in the preview area 204. The editing function area 405 may include a plurality of function options for editing a preview picture (for example, the thumbnail 101 of the cover picture) in the preview area 204, such as a function option 406 for cropping the preview picture in the preview area 204, a filter function option, a function option for automatic optimization, and a function option for adjusting, and the like.

It may be understood that the preview picture 407 of the image frame 403b may be the same as the cover picture 205 or may not be the same as the cover picture 205. Because the moving photo stored by the electronic device includes the video file and the image file, after detecting that the user presses a shutter button, the electronic device 10 may capture an image frame at a moment at which the user presses the shutter button, and store, as a picture file in a format of a picture, the image frame captured at the moment at which the user presses the shutter button, and refresh a thumbnail of a recent photo in the preview interface of a camera with the picture file. When generating the moving photo, the electronic device may use the picture file as the cover picture of the moving photo by default, and determine, as the image frame corresponding to the cover picture, an image frame that is in the video file and whose moment is closest to the moment at which the cover picture is captured. The cover photo and the image frame that is in the video file and whose moment is closest to the moment at which the cover picture is captured may not be a same image frame. In addition, an algorithm of the electronic device for processing the image frame in the picture file may not be the same as an algorithm for processing the image frame in the video file. Therefore, a default cover picture of the electronic device may be or may not be the same as a preview picture of a video frame corresponding to the default cover picture.

It may be understood that five image frames (for example, an image frame 403a, an image frame 403b, an image frame 403c, an image frame 403d, and an image frame 403e) included in the moving photo shown in FIG. 5A are merely examples. The moving photo may include more or fewer image frames. This is not limited in this embodiment of this application.

It may be understood that the plurality of image frames of the moving photo displayed in the display area 403 may be arranged in a sequence in which the plurality of image frames are obtained when the electronic device captures the moving photo.

It may be understood that the editing function area 405 shown in FIG. 5A may include more or fewer function options for editing. A quantity, a shape, or a name of the function option for editing included in the editing function area of the electronic device is not limited in this embodiment of this application.

Optionally, when there are a larger quantity of image frames included in the moving photo, the display area 403 for displaying the image frame in the moving photo may further include a control for flipping an image frame forward and a control for flipping an image frame backward. For example, FIG. 5B shows the user interface 400. The user interface 400 may further include a preview area 204, a control 401, a control 402, a display area 403, an indicator 404, and an editing function area 405. The display area 403 may further include a control 409 and a control 408. The user may tap the control 409 to view an image frame before the image frame 403a. The user may tap the control 408 to view an image frame after the image frame 403e.

Optionally, when there are a large quantity of image frames included in the moving photo, the user may slide right in the display area 403 to view the image frame before the image frame 403a. The user may also slide left in the display area to view the image frame after the image frame 403e.

Optionally, when there are a large quantity of image frames included in the moving photo, the user may also view the image frame before the image frame 403a and view the image frame after the image frame 403e using a voice instruction. For example, the user may send, to the electronic device, voice instructions such as "swipe forward" or "swipe left", and after receiving the voice instruction, the electronic device may display a thumbnail of the image frame before the image frame 403a. The user may send, to the electronic device, voice instructions such as "swipe backward" or "swipe right", and after receiving the voice instruction, the electronic device may display a thumbnail of the image frame after the image frame 403e.

The following uses the user interface 400 shown in FIG. 5A as an example for description.

The user may change the cover picture of the moving photo. That is, the user may set, as the cover picture of the moving photo, an image frame in the moving photo other than the image frame that is currently used as the cover picture.

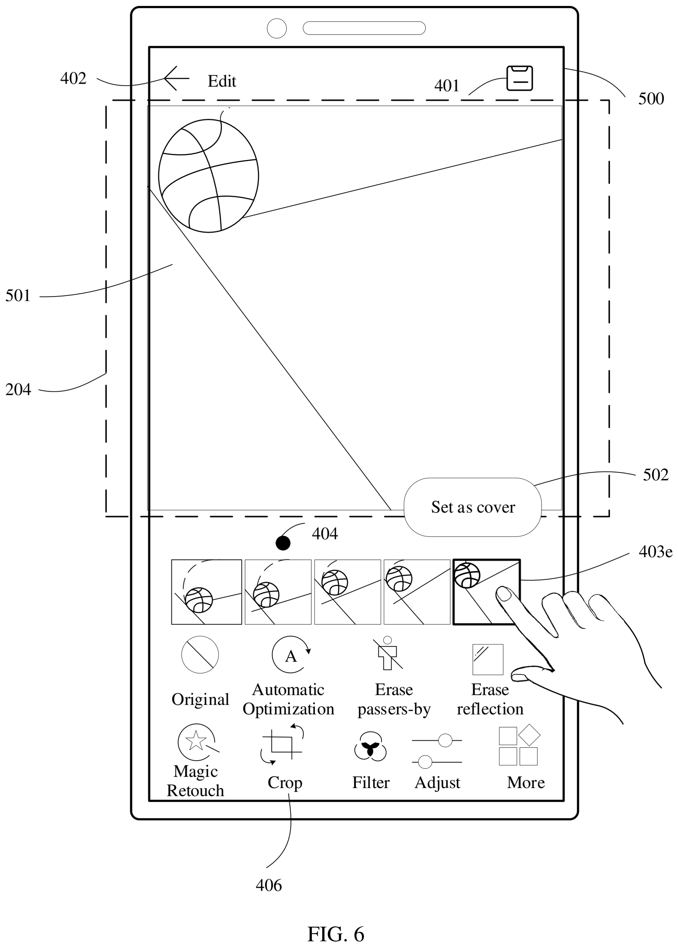

**For example,** **FIG. 6 to FIG. 8B** **show an example of a process in which the user replaces the cover picture of the moving photo.**

For example, FIG. 6 shows an example of a user interface 500 of the electronic device. As shown in FIG. 6, the user may select the image frame 403e in the user interface 500, and in response to this user operation, a preview picture 501 corresponding to the image frame 403e may be displayed in the preview area 204 in the user interface 500, and may display a control 502. The control 502 may be used to set, as the cover picture of the moving photo, an image frame that corresponds to a thumbnail selected by the user.

Optionally, in some feasible examples, the electronic device may highlight the image frame 403e when the user selects the image frame 403e in the user interface 500. For example, the electronic device may bold and blacken a border color of the image frame 403e. Alternatively, the electronic device may display a selected box on the image frame 403e. The selected box may be rectangular or of another shape, and a shape and a color of the selected box are not limited in this embodiment of this application. Alternatively, the electronic device may enlarge the image frame 403e (larger than another thumbnail) for displaying. It may be understood how the electronic device highlights the thumbnail selected by the user is not limited in this embodiment of this application.

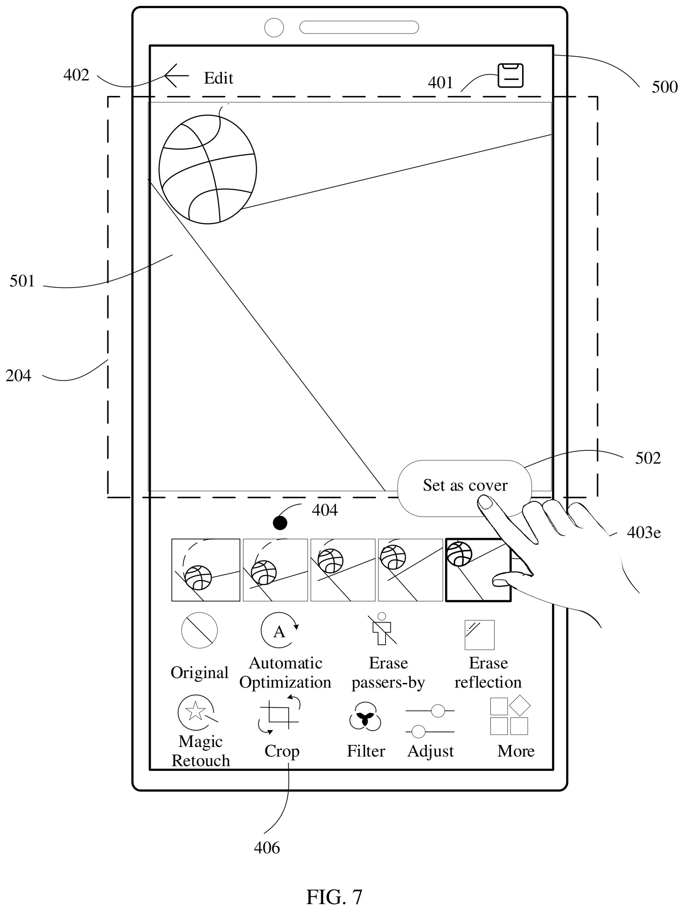

As shown in FIG. 7, the user may tap the control 502 in the user interface 500, and in response to this user operation, the electronic device may display a user interface 600.

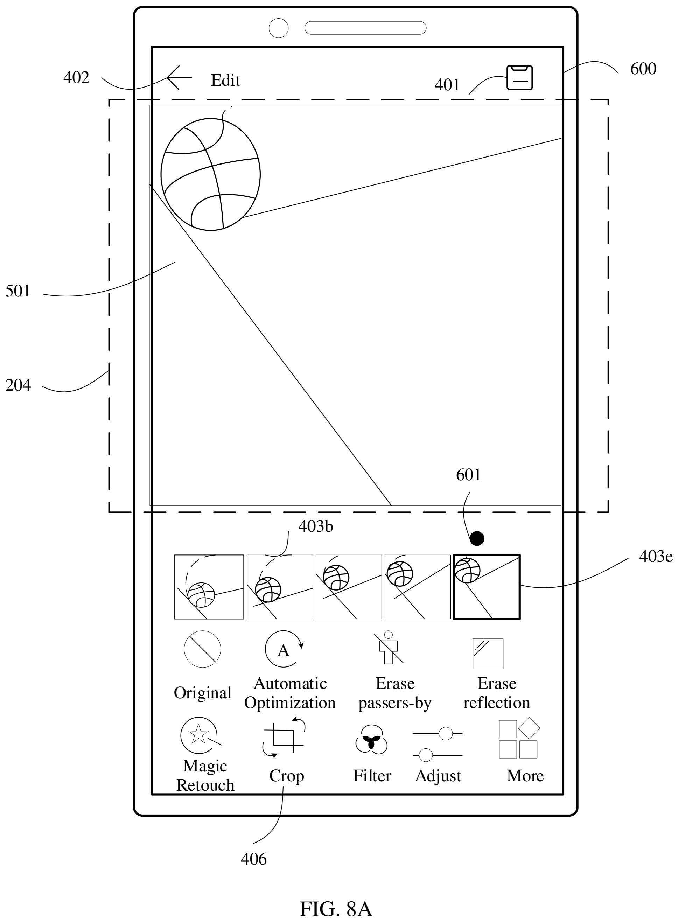

For example, FIG. 8A shows an example of the user interface 600 of the electronic device. As shown in FIG. 8A, the user interface 600 may include an indicator 601. The indicator 601 may be located above the image frame 403e, and may be used to indicate that the image frame 403e is a corresponding cover picture of the moving photo. An icon indicating that image frame 403b is the cover picture of the moving photo corresponding to the image frame 403b is not displayed above image frame 403b. That is, the cover picture of the moving photo is replaced from the image frame 403b to the image frame 403e.

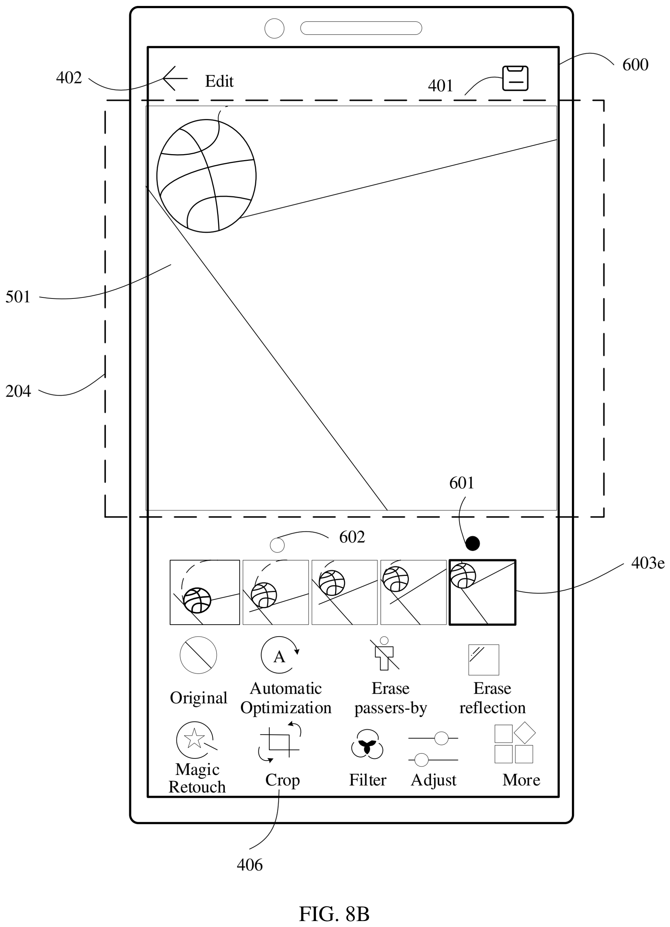

Optionally, in some feasible examples, when the cover picture of the moving photo is replaced from the image frame 403b to the image frame 403e, an icon indicating that the image frame 403b is used to be the cover picture of the moving photo may be displayed above the image frame 403b. As shown in FIG. 8B, the user interface 600 may further include an indicator 602. The indicator 602 may be located above the image frame 403b, and may be used to indicate that the image frame 403b is used to be the cover picture of the moving photo, but the image frame 403b is not currently the cover picture of the moving photo.

The user interface 600 shown in FIG. 8A is used as an example for description.

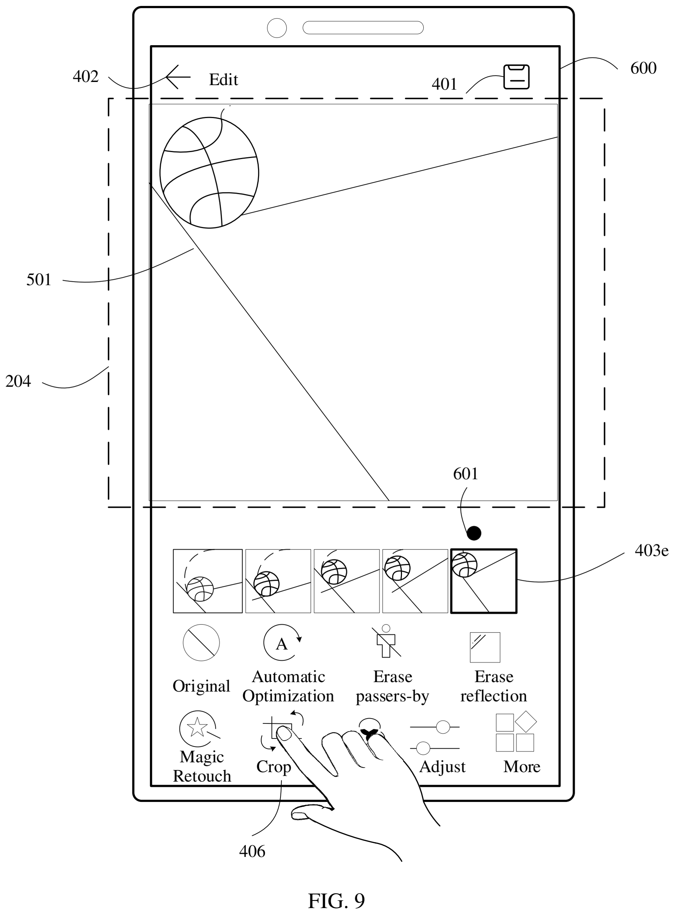

After the image frame 403e is set as the cover picture of the moving photo, the user may edit the image frame 403e. For example, as shown in FIG. 9, the user may tap the function option 406, and in response to this user operation, the electronic device may display a user interface 700.

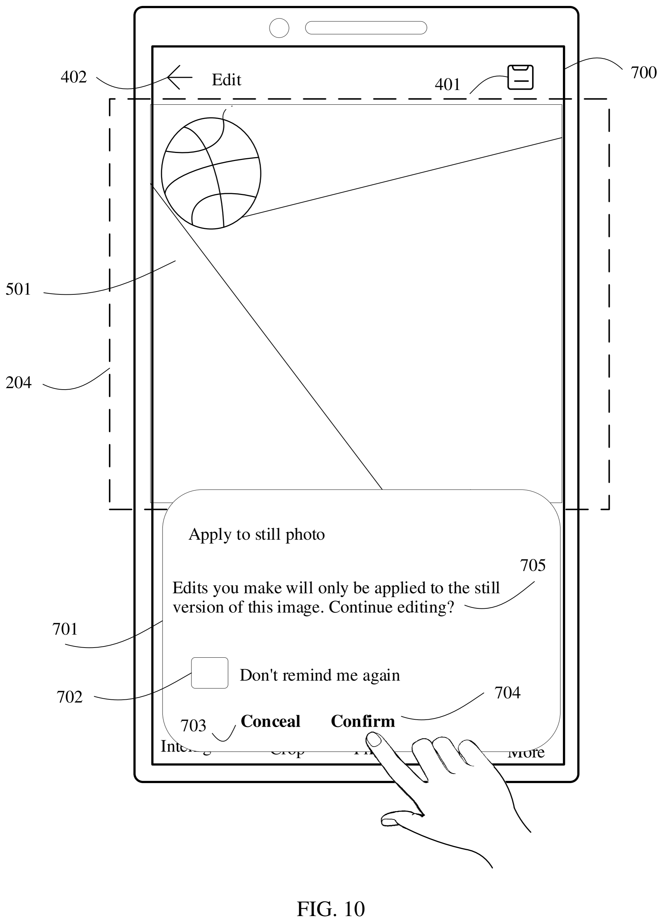

For example, FIG. 10 shows an example of the user interface 700 of the electronic device. As shown in FIG. 10, the user interface 700 may include a prompt box 701. The prompt box 701 may be configured to prompt the user for this editing effect being applied to the still photo only. The prompt box 701 may include a prompt text 705, a control 702, a control 703, and a control 704.

For example, content of the prompt text 705 may be "applied to still photos, and the next editing effect is applied to still photos only. Are you sure about the editing?" It may be understood that specific content of the prompt text 705 is not limited in this embodiment of this application. The user may tap the control 702, and in response to this user operation, the electronic device does not pop up the prompt box 701. The user may tap the control 703 to cancel the continuous editing. The user may further tap the control 704 to continue editing.

The following uses an example in which the user taps the control 704 to continue editing for description. As shown in FIG. 10, the user may tap the control 704, and in response to this user operation, the electronic device may display a user interface 800.

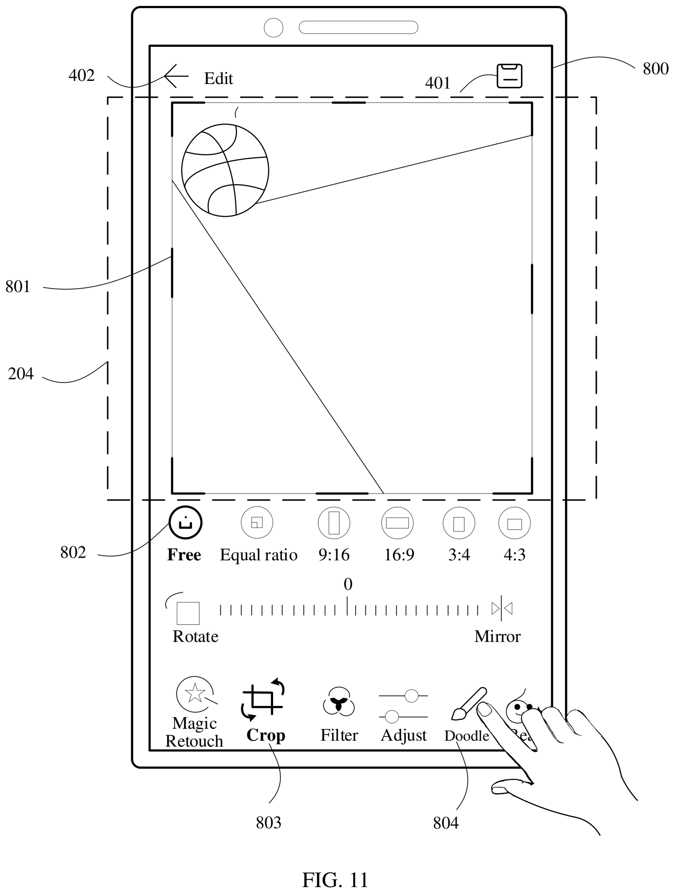

For example, FIG. 11 shows an example of the user interface 800 of the electronic device. As shown in FIG. 11, the user interface 800 may include a preview area 204, a preview picture 801, and a plurality of function options for editing the preview picture 801. The plurality of function options for editing the preview picture 801 may include a function option 803 for cropping the preview picture 801, a function option for intelligently optimizing the preview picture, a function option for adding a filter to the preview picture 801, a control 804 for adding a doodle to the preview picture 801, and the like. An example in which the user selects the function option 803 and then selects the function option 802 is used for description. The preview picture 801 is obtained by cropping the preview picture 501 (for example, the preview picture of the image frame 403e) in a free proportion. The user may further perform doodling in the cropped preview picture 801. As shown in FIG. 11, the user may further tap the control 804, and in response to this user operation, the electronic device may display a user interface 900.

In some examples, cropping may also be referred to as trimming.

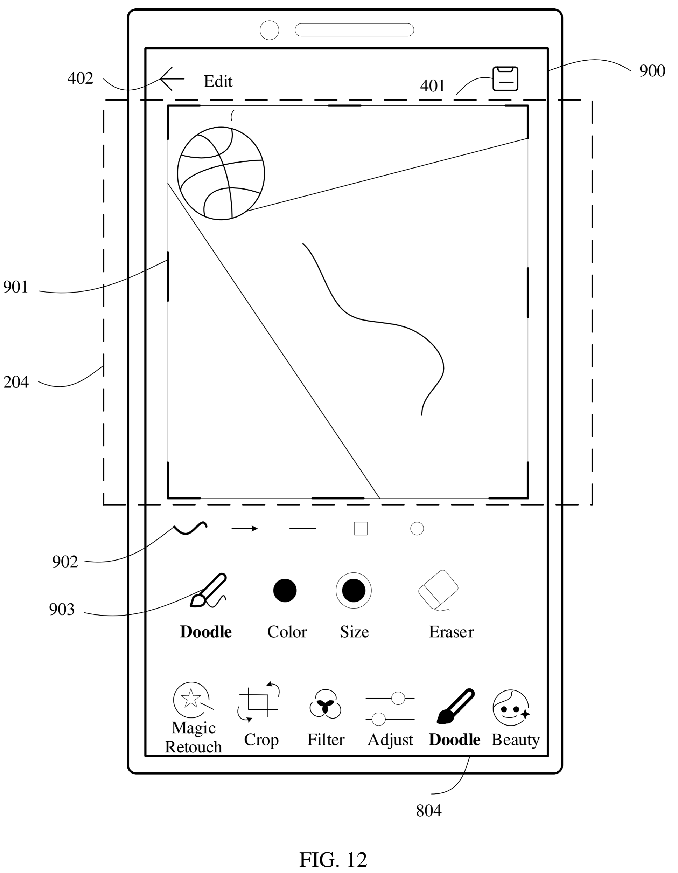

For example, FIG. 12 shows an example of the user interface 900 of the electronic device. As shown in FIG. 12, the user interface 900 may include a doodled preview picture 901, a doodle editing option 902, and a doodle editing option 903. The preview picture 901 may be obtained by performing doodle editing in the preview picture 801 after the user selects the doodle editing option 902 and the doodle editing option 903.

It may be understood that a specific editing operation of the image frame is not limited in this embodiment of this application. The editing operation of first cropping the image frame selected by the user and then performing doodling shown in FIG. 11 and FIG. 12 is only an example, and the user may perform any editing operation on the image frame, for example, beautifying, adding a filter, adjusting brightness, and the like.

After editing the selected image frame, the user may store an edited image frame. As shown in FIG. 12, the user may tap the control 401, and in response to this user operation, the electronic device may display a user interface 1000.

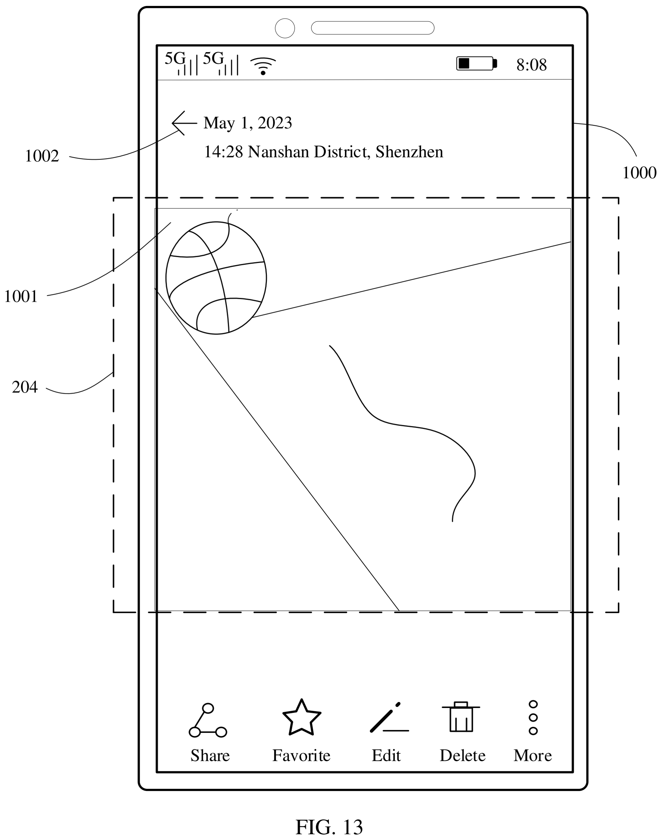

For example, FIG. 13 shows an example of the user interface 1000 of the electronic device. As shown in FIG. 13, the user interface 1000 displays a still photo 1001 stored by the electronic device.

FIG. 1 to FIG. 13 shows a schematic diagram of a process of editing the image frame in the moving photo according to an embodiment of this application. The user may edit, based on the process shown in FIG. 1 to FIG. 11, any image frame in the moving photo selected by the user. However, according to the process, before editing any image frame in the moving photo, the electronic device needs to set a to-be-edited image frame as the cover picture of the moving photo based on the user operation, and edits, based on the user operation, the image frame that has been set as the cover picture. In this way, the process of editing the image frame in the moving photo on the electronic device is complex.

In the schematic diagram of the process of editing the image frame in the moving photo shown in FIG. 1 to FIG. 13, after the user selects the image frame in the moving photo for editing, the electronic device displays an editing interface of the still photo, for example, the user interface 800 and the user interface 900 shown in FIG. 11 and FIG. 12. The user interface 800 and the user interface 900 have no control through which the editing interface of the still photo returns to the editing interface (for example, the user interface 400 shown in FIG. 5A) of the moving photo. In this way, during or after the editing of one image frame, the user may not quickly return to the editing interface of the moving photo to continuously edit another image frame.

To enable the user to continuously edit the image frame in the moving photo, an embodiment of this application provides a method for processing the moving picture. The user may continuously edit the image frame in the moving photo. When the image frame is edited in the moving photo, the electronic device does not need to set another image frame in the moving photo as the cover picture, and may directly edit any image frame in the moving photo. In this way, the image frame in the moving photo can be continuously edited, and the process of editing the image frame in the moving photo on the electronic device can be simplified. This reduces power consumption of the electronic device, and improves user experience.

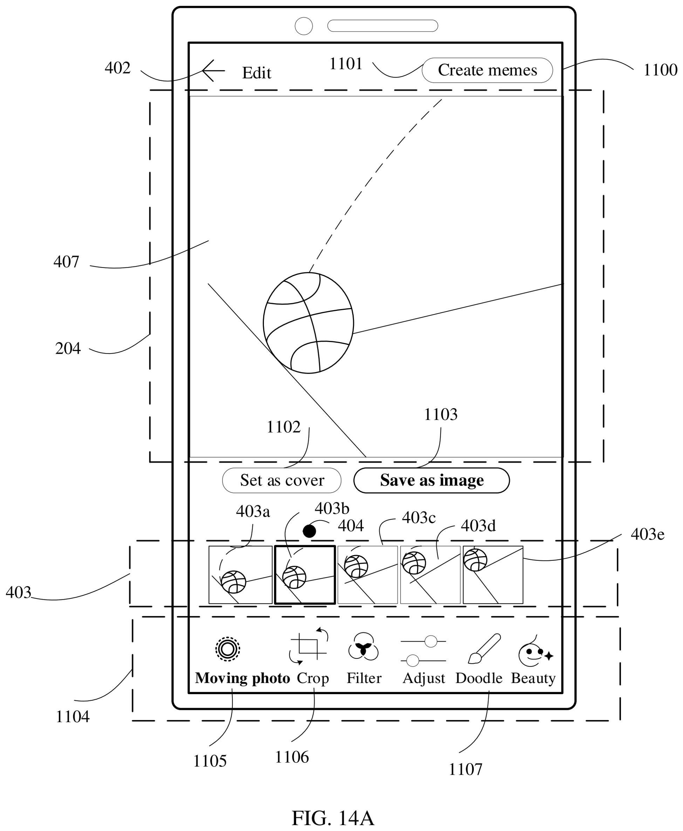

FIG. 14A to FIG. 25 show a schematic diagram of a process of editing an image frame in a moving photo on the electronic device to obtain a still photo, and then returning to an editing interface of the moving photo.

A user may tap a function option 203 in a user interface 200 of the electronic device, and in response to this user operation, the electronic device may display a user interface 1100.

For example, FIG. 14A shows an example of the user interface 1100 of the electronic device. As shown in FIG. 14A, the user interface 1100 may include a preview area 204, a display area 403, a control 1101, a control 1102, a control 1103, a control 402, and an editing function area 1104. The preview area 204 may display an image frame currently selected by the user, for example, a preview picture 407 corresponding to the image frame 403b. The display area 403 may display a plurality of image frames (such as an image frame 403a, an image frame 403b, an image frame 403c, an image frame 403d, and an image frame 403e) included in the moving photo. The control 1101 may be configured to make a meme with the image frame in the display area. The control 1102 may be configured to set, as the cover picture of the moving photo, an image frame (for example, the image frame 403a, the image frame 403c, the image frame 403d, and the image frame 403e) that is in the display area 403 and that is other than the image frame 403b currently set as the cover picture of the moving photo. Alternatively, after setting, as the cover, an image frame other than the image frame 403b corresponding to the preview image 407 of the current cover image, the control 1102 may further reset the image frame 403b as the cover again. The control 1103 may be used to store any image frame included in the moving photo as a picture (may also be referred to as a still photo). The control 402 may be used to return to an upper-level interface. The editing function area 1104 may include a plurality of function options for editing the preview image in the preview area 204, such as a function option 1105 for resetting an editing interface of the preview picture to the editing interface of the moving photo, a function option 1106 for cropping the preview picture, and a function option for adding a filter to the preview picture, and a function option for adjusting brightness, contrast, and saturation of the preview picture, a function option for beautifying the preview picture, and the like.

Optionally, when the image frame selected by the user is the cover picture, that is, when the user selects the image frame 403b, the electronic device may set the control 1102 to an unavailable state. To be specific, the user may not set, as the cover picture of the moving photo again, an image frame corresponding to a cover picture that has been set as the moving photo. For example, the control 1102 shown in FIG. 14A is set to the unavailable state.

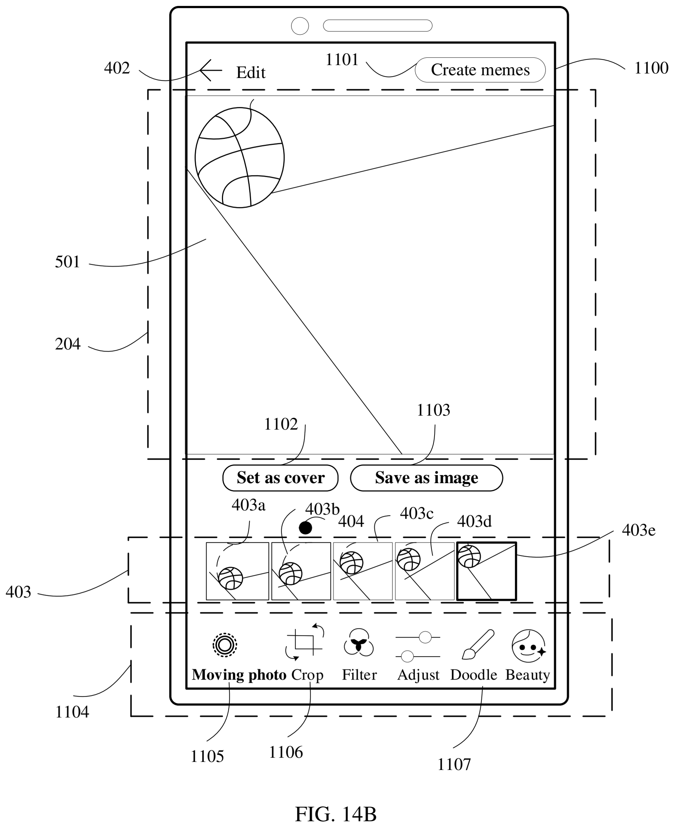

It may be understood that when the image frame selected by the user is not the cover picture of the moving photo, the control 1102 is in an available state. For example, as shown in FIG. 14B, when the user currently selects the image frame 403e, the control 1102 is in the available state. To be specific, the user may tap the control 1102 to set the image frame 403e as the cover picture of the moving photo.

As shown in FIG. 14A and FIG. 14B, the function option in the user interface 1100 is in a state 1. When being in the state 1, the function option 1105 may be further used to indicate that a photo displayed in the interface is the moving photo.

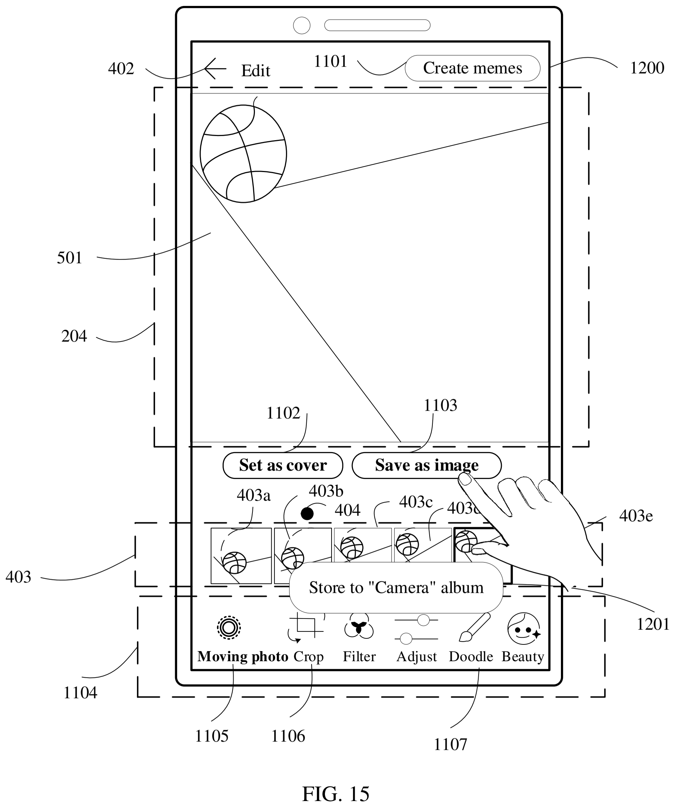

The user may store any image frame in the moving photo as a picture by tapping the control 1103. For example, in the user interface 1200 shown in FIG. 15, the user currently selects the image frame 403e and then may tap the control 1103, and in response to this user operation, the electronic device may store the image frame 403e as a picture. Optionally, after storing the image frame 403e as a picture, the electronic device may display a prompt box 1201. The prompt box 1201 may be used to prompt the user for the electronic device having stored the image frame 403e to an album of a "camera" of the electronic device. Prompt content of the prompt box 1201 may be "stored to the "album" of the camera". It may be understood that specific prompt content of the prompt box 1201 is not limited in this embodiment of this application.

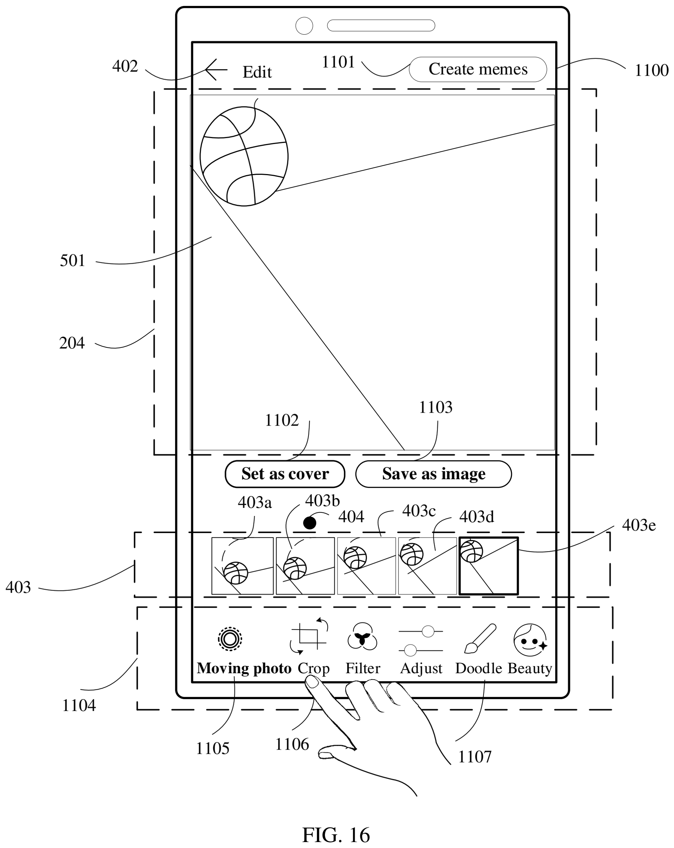

The user may select any image frame in the moving photo, and then select any function option for editing the preview image of the image frame. For example, as shown in the user interface 1100 of the electronic device in FIG. 16, the user may select the image frame 403e in the display area 403 of the user interface 1100, and in response to this user operation, the electronic device may display a preview picture 501 of the image frame 403e in the preview area 204. After the user selects the image frame 403e, the user may tap the function option 1106 in the editing function area 1104, and in response to this user operation, the electronic device may display a user interface 1300.

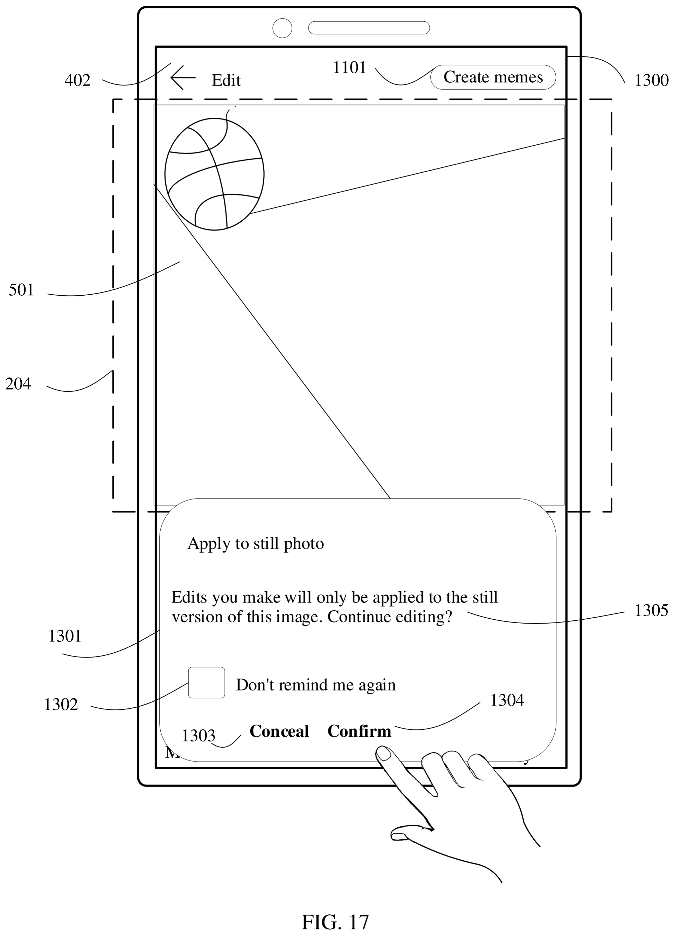

For example, FIG. 17 shows an example of the user interface 1300 of the electronic device. As shown in FIG. 17, the user interface 1300 may include a prompt box 1301. The prompt box 1301 may be used to prompt the user for this editing effect being applied to the still photo only. The prompt box 1301 may include a prompt text 1305, a control 1302, a control 1303, and a control 1304. For details of the prompt box 1301, refer to the description of the prompt box 701. Details are not described herein again.

The following uses an example in which the user taps the control 1304 to continue editing for description. As shown in FIG. 17, the user may tap the control 1304, and in response to this user operation, the electronic device may display a user interface 1400.

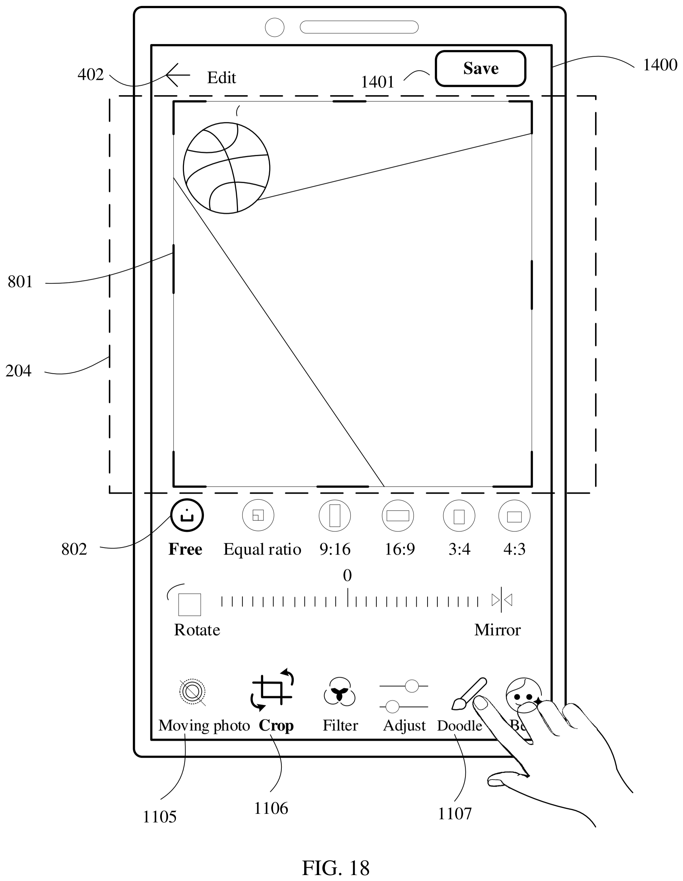

For example, FIG. 18 shows an example of the user interface 1400 of the electronic device. As shown in FIG. 18, the user interface 1400 may include a preview area 204, a preview picture 801, a plurality of function options for editing the preview picture 801, and a control 1401. The plurality of function options for editing the preview picture 801 may include a function option 1106 for cropping the preview picture 801, a function option for intelligently optimizing the preview picture, a function option 1107 for adding a doodle to the preview picture 801, a function option for adding a filter to the preview picture 801, and the like. An example in which the user selects the function option 1106 and then selects the function option 802 is used for description. The preview picture 801 is obtained by cropping the preview picture 501 (for example, the preview picture of the image frame 403e) in a free proportion. The control 1401 may be used to store an edited preview picture in the user interface 1300.

The user interface shown in FIG. 18 is the editing interface of the still photo. As shown in FIG. 18, the function option 1105 is currently in a state 2. When being in the state 2, the function option 1105 may be used to indicate that a photo displayed in the user interface 1400 is the still photo.

The user may tap the function option 1107 again, and in response to this user operation, the electronic device may display a user interface 1500.

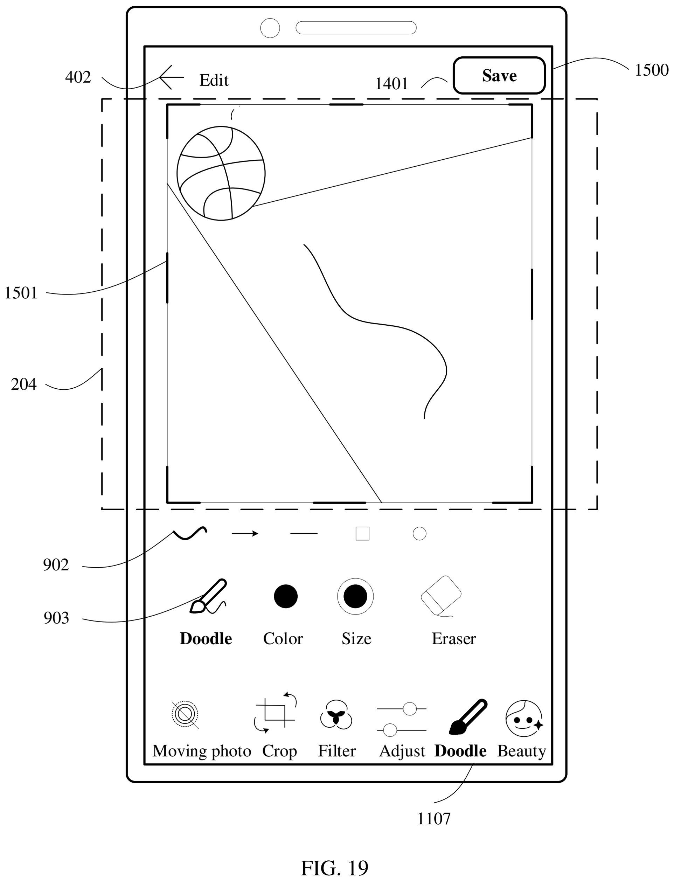

For example, FIG. 19 shows an example of the user interface 1500 of the electronic device. As shown in FIG. 19, the user interface 1500 may include a doodled preview picture 1501, a doodle editing option 902, and a doodle editing option 903. The preview picture 1501 may be obtained by performing doodle editing in the preview picture 801 after the user selects the doodle editing option 902 and the doodle editing option 903.

It may be understood that a specific editing operation of the image frame is not limited in this embodiment of this application. The editing operation of first cropping the image frame selected by the user and then performing doodling shown in FIG. 18 and FIG. 19 is only an example, and the user may perform any editing operation on the image frame, for example, beautifying, adding a filter, adjusting brightness, and the like.

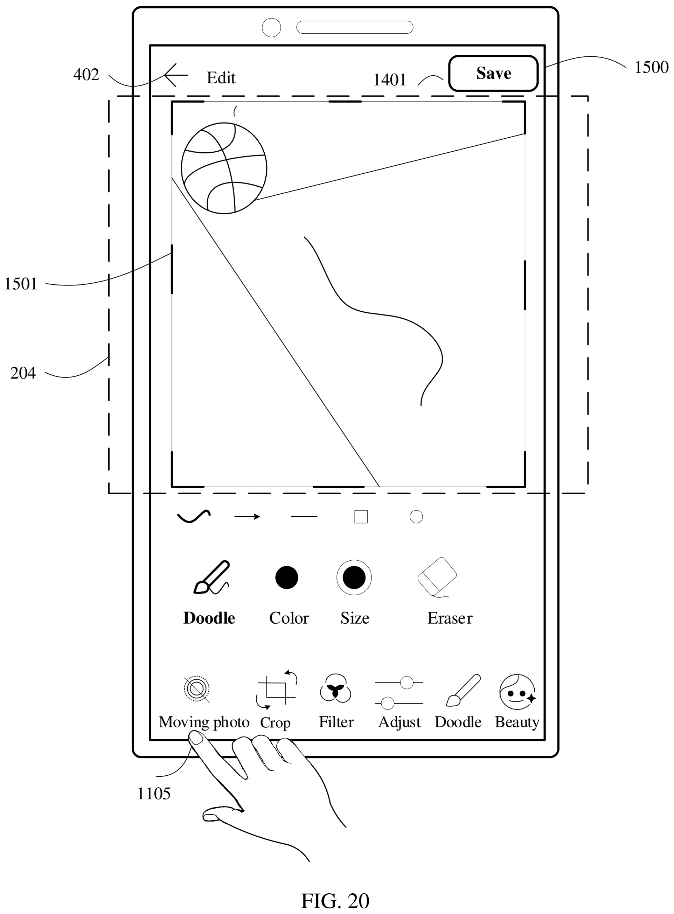

When the user or the electronic device returns to the editing interface of the moving photo from an editing interface of a current still photo on the electronic device and continues to edit the image frame in the moving photo continuously, the user may tap the function option 1105. As shown in FIG. 20, the user may tap the function option 1105 in the user interface 1500, and in response to this user operation, the electronic device may display a user interface 1600.

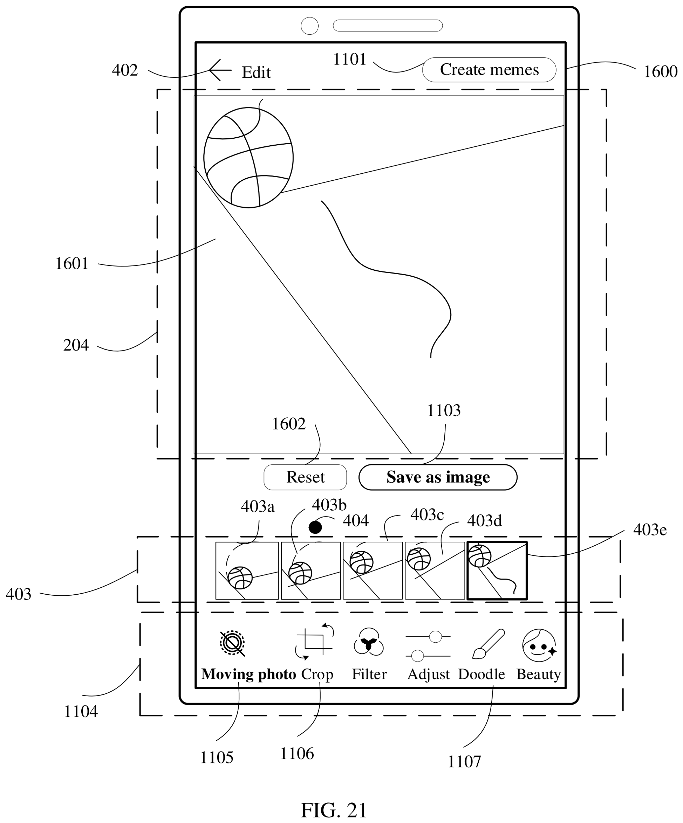

For example, FIG. 21 shows an example of the user interface 1600 of the electronic device. As shown in FIG. 21, the user interface 1600 may include a preview area 204, a control 1101, a control 402, a display area 403, an editing function option 1104, and a control 1602. The preview area 204 displays a preview picture 1601.

The preview picture 1601 and the preview picture 1501 correspond to a same still photo. The preview picture 1501 is a preview picture of the still photo in an editing mode. The preview picture 1601 is a preview picture of the still photo in a photo display mode or a photo preview mode.

Optionally, the plurality of image frames in the display area 403 may be set to a non-selectable state of viewing a preview photo. That is, the user may not select any image frame and then view a preview picture corresponding to the any image frame in the preview area 204. The preview area 204 does not display a preview picture of the image frame selected by the user.

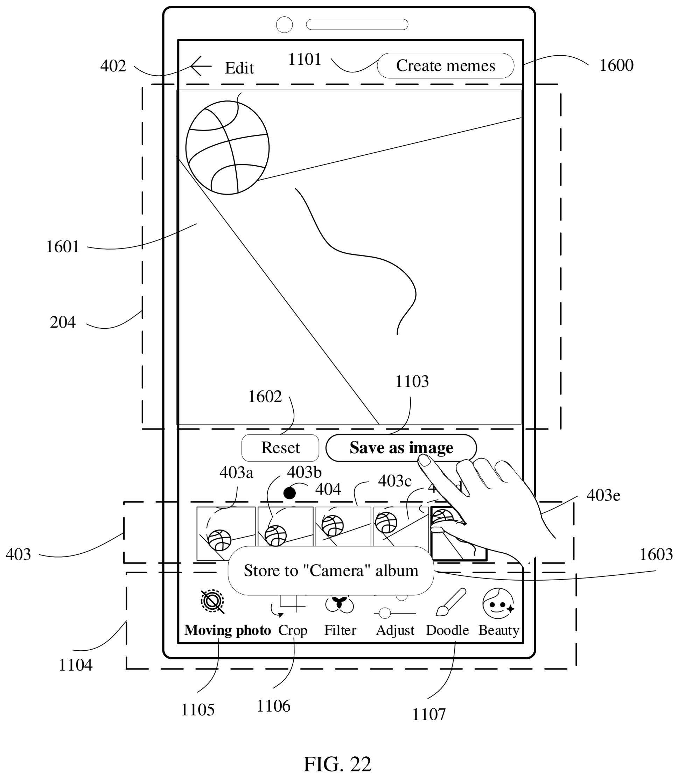

The user may further tap the control 1103 in the user interface, and may store, to the electronic device, the edited image frame, that is, the preview picture 1601, displayed in the preview area 204. As shown in FIG. 22, the user may tap the control 1103, and in response to this user operation, the electronic device may display a prompt box 1603. The prompt box 1603 may be used to prompt the user for the electronic device having stored the preview picture to the album of the "camera" in a gallery application. In this case, the electronic device does not jump to an interface of the preview photo that is stored in the gallery, and continues to stay in the interface shown in FIG. 22.

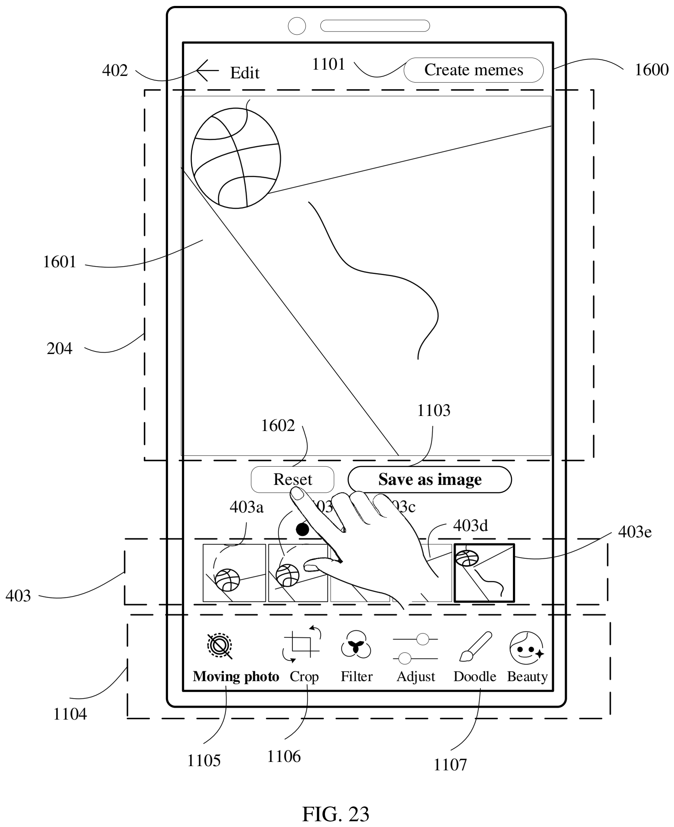

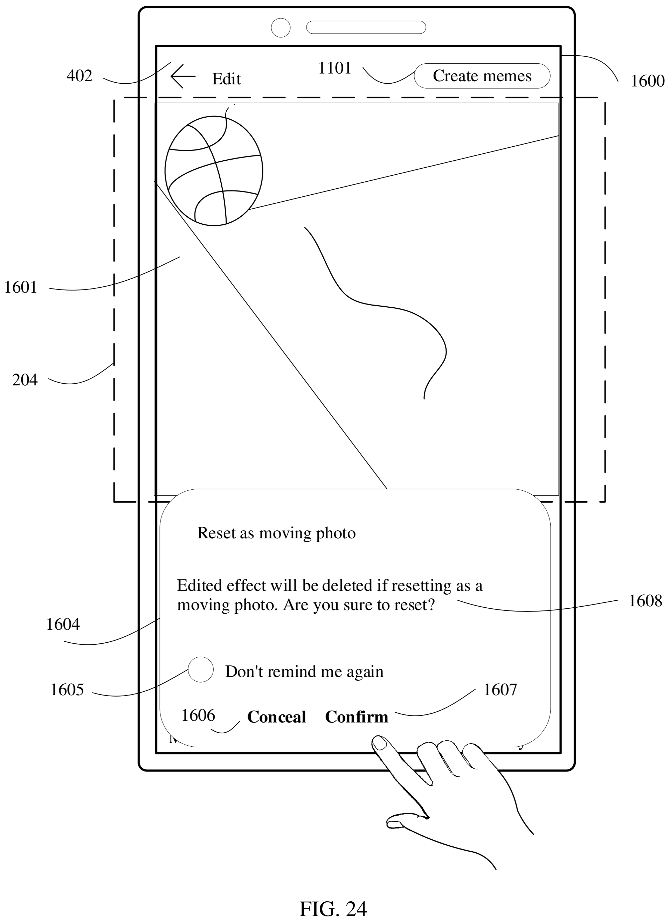

The user may tap the control 1602 in the user interface 1600 to reset the interface of the still photo of the electronic device to the editing interface of the moving photo. As shown in FIG. 23, the user may tap the control 1602, and in response to this user operation, the electronic device may display a prompt box 1604. As shown in FIG. 24, the user interface 1600 of the electronic device displays the prompt box 1604. The prompt box 1604 may be used to prompt the user for resetting and displaying the moving photo on the electronic device, and deleting the edited effect. The prompt box 1604 may include a prompt text 1608, a control 1605, a control 1606, and a control 1607.

The prompt text 1608 may be used to prompt the user for resetting or not. The prompt text 1608 may be "Reset as the moving photo. The edited effect will be deleted if resetting as the moving photo. Are you sure to reset?" It may be understood that the prompt text 1608 is not limited in this embodiment of this application.

The user may tap the control 1605, and in response to this user operation, the electronic device does not display the prompt box 1604. The user may tap the control 1606 to cancel resetting as the moving photo. The user may further tap the control 1607 to determine resetting as the moving photo.

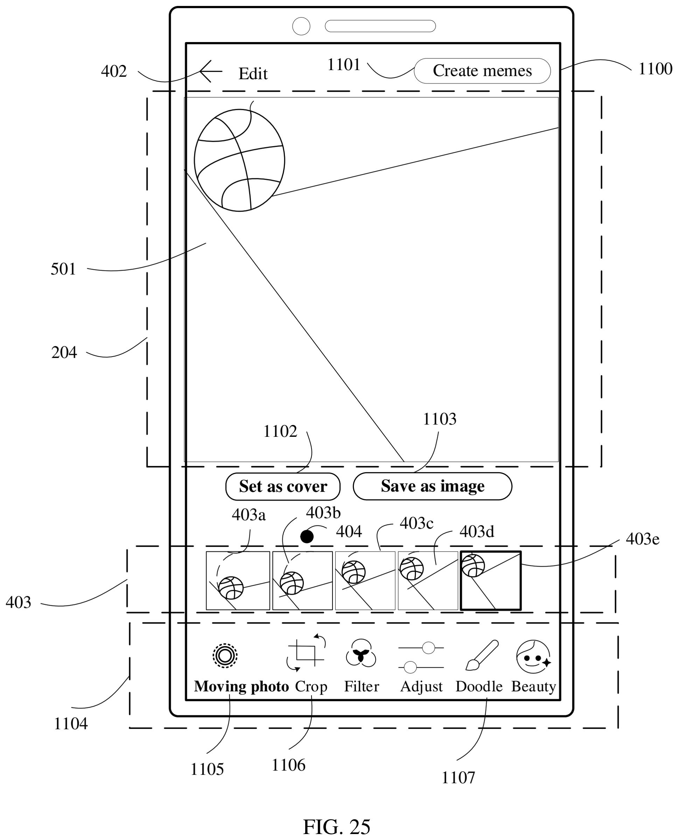

The following uses an example in which the user taps control 1607 to determine resetting as the moving photo for description. As shown in FIG. 24, the user may tap the control 1607 in the user interface 1600, and in response to this user operation, the electronic device may display the editing interface of the moving photo, that is, the user interface 1100 shown in FIG. 25. In the user interface 1100, the function option 1105 is in the state 1.

The user may select another image frame in the moving photo for editing in the user interface 1100. For a process of editing the another image frame, refer to the process of editing the image frame 403e shown in FIG. 14A to FIG. 19.

When continuing to edit the moving photo, the user may tap the function option 1105. In response to this user operation, the electronic device may return from the editing interface of the still photo to the editing interface of the moving photo. In this way, the user may continuously edit the another image frame in the editing interface of the moving photo.

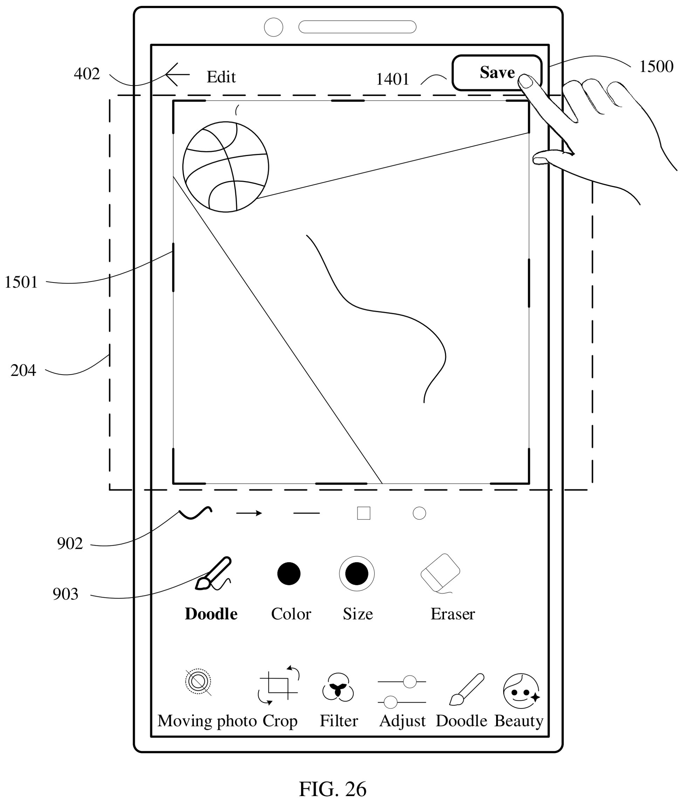

Optionally, when the user does not continue to edit the moving photo, the still photo of a currently edited image frame may be further stored. The gallery of the electronic device displays the edited still photo accordingly. For example, as shown in FIG. 26, the user may tap the control 1401 in the user interface 1500, and in response to this user operation, the electronic device may display the user interface 1000.

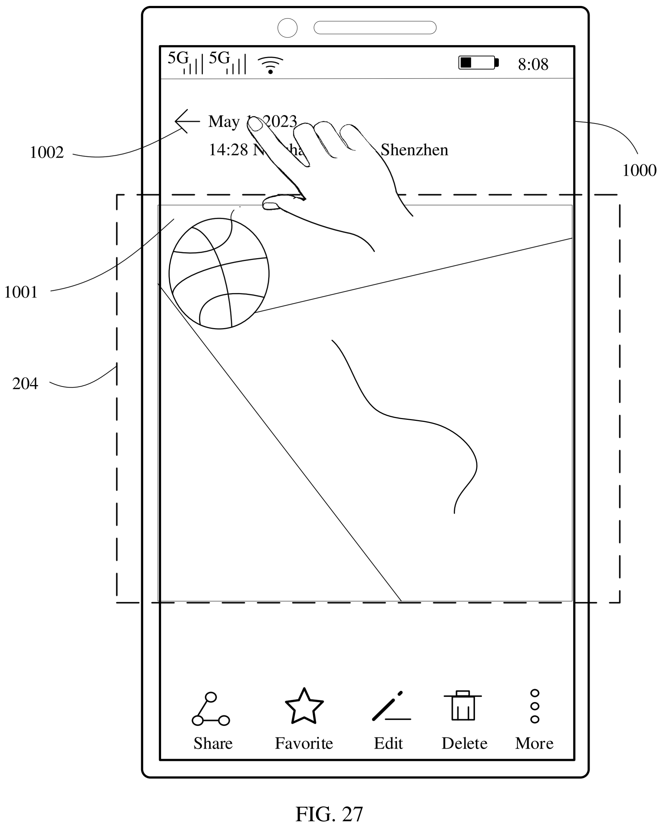

As shown in FIG. 27, the user interface 1000 may be a full-size image display interface of the still photo 1001. The user interface 1000 may also be referred to as the preview interface of the still photo 1001. The still photo 1001 is the edited image frame 403e stored by the electronic device. For the user interface 1000, refer to the description in FIG. 13. Details are not described herein again.

The user may further tap the control 1002 in the user interface 1000, and in response to this user operation, the electronic device may display a user interface 1700.

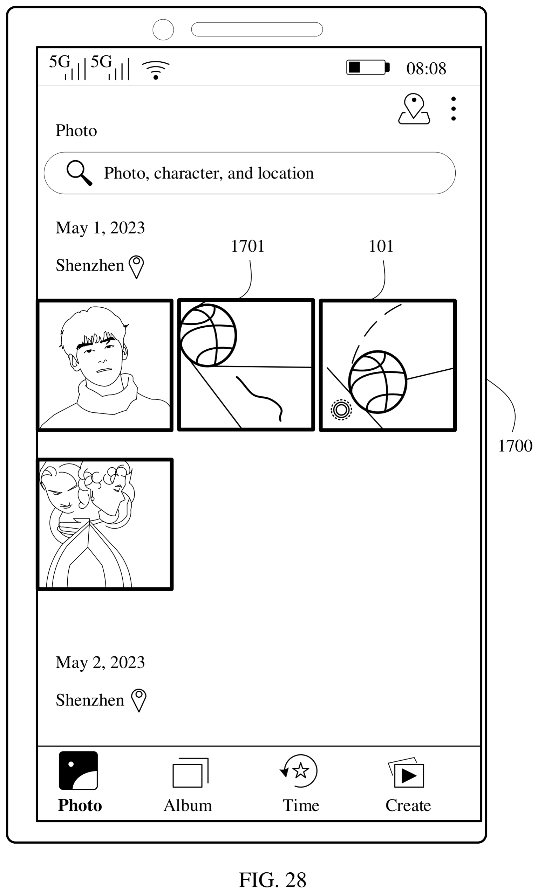

For example, FIG. 28 shows an example of the user interface 1700 of the electronic device. The user interface 1700 is an upper-level interface of the user interface 1000. As shown in FIG. 28, the user interface 1700 may be used to display thumbnails of a plurality of photos that are classified based on a time and place and that are stored in the electronic device, for example, a thumbnail 1701 of a still photo stored on May 1, 2023. A still photo that corresponds to the thumbnail 1701 is the preview picture 1501 stored by the user in the user interface 1500.

The thumbnail 1701 and the thumbnail 101 of the cover photo of the moving photo may be stored in a same classification bar (classified based on a photographing date) of the gallery.

Further, as shown in FIG. 28, in the photo classification display interface of the gallery, the thumbnail 1701 may be displayed adjacent to the thumbnail 101 of the cover photo of the moving photo. That is, the thumbnail 1701 may be located on a left side of the thumbnail 101 of the cover photo of the moving photo.

Optionally, the thumbnail 1701 may be located on a right side of the thumbnail 101 of the cover picture of the moving photo.

Optionally, in a possible implementation, the electronic device may arrange, based on a time sequence of obtaining the image frame in the moving photo corresponding to the thumbnail 1701 and obtaining the image frame corresponding to the cover picture of the moving photo, the thumbnail 1701 and the thumbnail 101 of the cover photo of the moving photo in the gallery. For example, if the obtaining time of the image frame in the moving photo corresponding to the thumbnail 1701 is before the obtaining time of the image frame corresponding to the cover picture of the moving photo, the electronic device displays, in the gallery, the thumbnail 1701 in a next row (that is, in the same classification bar of the gallery, the thumbnail 101 is located on the rightmost side, and the thumbnail 1701 is located on the leftmost side of the next row) or on a right side of the thumbnail 101 of the cover photo. If the obtaining time of the image frame in the moving photo corresponding to the thumbnail 1701 is after the obtaining time of the image frame corresponding to the cover picture of the moving photo, the electronic device displays, in the gallery, the thumbnail 1701 in an upper row (that is, in the same classification bar of the gallery, the thumbnail 1701 is located on the rightmost side, and the thumbnail 101 is located on the leftmost side or rightmost side of the next row) or on a left side of the thumbnail 101 of the cover photo.

Optionally, the user may set the image frame 403e as the cover picture in the user interface 1100 shown in FIG. 14B. When the cover picture of the moving photo is replaced from the image frame 403b to the image frame 403e, the electronic device may store, in the gallery of the electronic device, the moving photo obtained after the cover picture is replaced. The user may view, in the gallery, that the cover picture of the moving photo has been replaced.

Optionally, the electronic device may store, as another moving photo, the moving photo of which cover picture has been replaced.

It may be understood that the cropping performed on the image frame in the moving photo shown in the accompanying drawings is only an example, and the user may further perform other editing operations on the image frame in the moving photo based on the process shown in the accompanying drawings, for example, adding a filter, beautifying, doodling, adding a text, adding a map, and the like. Specific editing operations performed on the image frame in the moving photo are not limited in this embodiment of this application.

Through the method for editing a moving photo shown in FIG. 14A to FIG. 28, the user may edit the image frame in the moving photo, and may further reset the editing interface of the image frame to the editing interface of the moving photo after editing one image frame. The user may select another image frame for continuous editing in the editing interface of the moving photo. After the user edits the image frame, the electronic device may further store the edited image frame as a still photo in a gallery.

Based on the description of the process of editing the image frame in the moving photo on the electronic device, an embodiment of this application provides a method for editing a moving photo. Through the method, any image frame stored in the moving photo may be edited, and the electronic device may further store the edited image frame as a still photo.

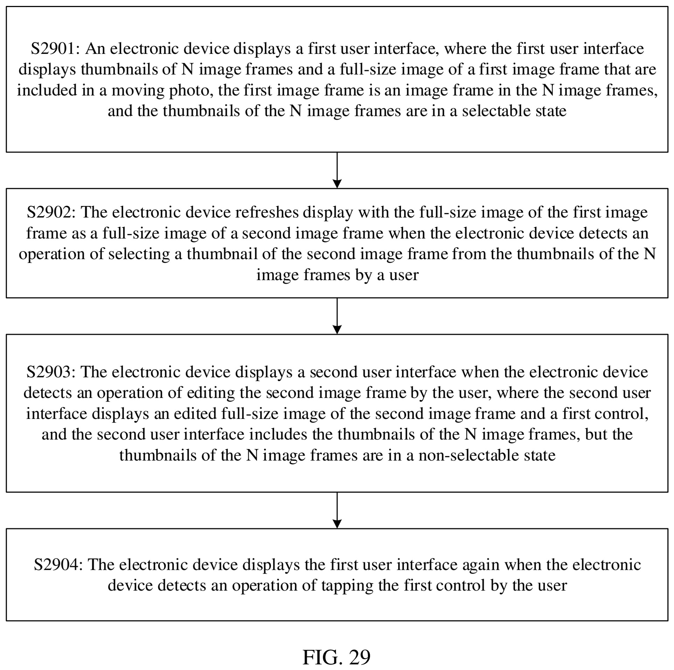

The following describes the method for editing a moving photo provided in this embodiment of this application with reference to the accompanying drawings. As shown in FIG. 29, the method for editing a moving photo provided in this embodiment of this application may include the following steps.

S2901: An electronic device displays a first user interface, where the first user interface displays thumbnails of N image frames and a full-size image of a first image frame that are included in a moving photo, the first image frame is an image frame in the N image frames, and the thumbnails of the N image frames are in a selectable state.

The thumbnails of the N image frames are arranged in the first user interface in a photographing time sequence of the N image frames.

The first user interface may be the user interface 1100 shown in FIG. 14A. The N image frames may be the image frame 403a, the image frame 403b, the image frame 403c, the image frame 403d, and the image frame 403e that are shown in FIG. 14A. The first image frame may be the image frame 403b. A full-size image of the first image frame may be a preview picture 407. Thumbnails of the image frame 403a, the image frame 403b, the image frame 403c, the image frame 403d, and the image frame 403e are in a selectable state. That is, the user may select the thumbnail of any one of the image frames 403a, the image frame 403b, the image frame 403c, the image frame 403d, and the image frame 403e in the user interface 1100.

The first image frame may be an image frame corresponding to the cover picture of the moving photo, or may also be an image frame that is previously selected by the user.

In a possible implementation, the first user interface displays a first indicator when the first image frame is the image frame corresponding to the cover picture of the moving photo, and the first indicator may be used to indicate that the first image frame is the cover picture of the moving photo. Refer to FIG. 14A. The first indicator may be an indicator 404. The indicator 404 may be used to indicate that the image frame 403b is the cover picture (or the image frame corresponding to the cover picture) of the moving photo.

In a possible implementation, the first user interface may further include a fourth control and a fifth control. The fourth control is configured to set an image frame selected by the user from the N image frames as the cover picture of the moving photo; and the fifth control is configured to store the image frame selected by the user from the N image frames as a still photo in a gallery. Refer to FIG. 14A, the fourth control may be the control 1102 in FIG. 14A, and the fifth control may be the control 1103 shown in FIG. 14A.

In a possible implementation, the electronic device sets the fourth control to be in an unavailable state when the electronic device detects that the image frame selected by the user is the cover picture of the moving photo. Refer to FIG. 14A. The image frame selected by the user is the image frame 403b, and the image frame 403b is an image frame corresponding to a current cover picture. In this case, the control 1102 is in an unavailable state.

In a possible implementation, before the electronic device displays a first user interface, the method may further include: The electronic device displays a thumbnail display interface of the gallery application, where the thumbnail display interface is configured to display thumbnails of a plurality of photos stored in the gallery application, and the thumbnails of the plurality of photos include a thumbnail of the moving photo; and the electronic device displays a full-size image display interface when the electronic device detects an operation of tapping the thumbnail of the moving photo by the user, where the full-size image display interface displays a full-size image of a cover picture of the moving photo.

That an electronic device displays a first user interface specifically includes: The electronic device displays the first user interface when the electronic device detects an operation of displaying the moving photo in the full-size image display interface by the user.

Before an electronic device displays a first user interface, the method may further include: The electronic device stores as a video, at least one image frame cached before a moment at which a shutter operation is performed, and stores, as videos, at least one image frame cached at the moment at which the shutter operation is performed and at least one image frame cached after the moment at which the shutter operation is performed; the electronic device stores, as a still photo, an image frame captured at the moment at which the shutter operation is performed; and the electronic device generates the moving photo based on the video and the still photo, where the still photo is the cover picture of the moving photo.

The first user interface further displays a first function option, the first function option is in a first state, and the first state is used to indicate that a photo displayed in the first user interface is the moving photo. Refer to FIG. 14A. The first function option may be the function option 1105 in FIG. 14A. The function option 1105 is in a first state in the user interface 1100 shown in FIG. 14A. The first state may be referred to as the state 1.

S2902: The electronic device refreshes the full-size image of the first image frame to display as a full-size image of a second image frame when the electronic device detects an operation of selecting a thumbnail of the second image frame from the thumbnails of the N image frames by a user.

Refer to FIG. 14B. The second image frame may be the image frame 403e. When the user selects the thumbnail of the image frame 403e, a full-size image displayed in the preview area 204 is refreshed and displayed as a full-size image of the image frame 403e, that is, the preview picture 501.

In a possible implementation, after the electronic device refreshes the full-size image of the first image frame to display as a full-size image of a second image frame when the electronic device detects an operation of selecting a thumbnail of the second image frame from the thumbnails of the N image frames by a user, the method may further include: The electronic device sets the second image frame as the cover picture of the moving photo when the electronic device detects an operation of tapping the fourth control by the user; and the electronic device displays the thumbnail display interface of the gallery application again, and updates, in the thumbnail display interface, a thumbnail of the moving photo that is after the cover photo. Refer to FIG. 14A and FIG. 14B. In FIG. 14A, the image frame 403B selected by the user is the cover picture of the moving photo, and in FIG. 14B, the user may tap the control 1102 after selecting the image frame 403e. In this way, the image frame 403e may be updated to the cover picture of the moving photo. After the update, the thumbnail 101 of the moving photo in the user interface shown in FIG. 1 is updated to the thumbnail of the image frame 403e.

In a possible implementation, after the electronic device refreshes the full-size image of the first image frame to display as a full-size image of a second image frame when the electronic device detects an operation of selecting a thumbnail of the second image frame from the thumbnails of the N image frames by a user, the method may further include: The electronic device stores the second image frame as a second still photo in the gallery when the electronic device detects an operation of tapping the fifth control by the user. As shown in FIG. 15, after selecting the image frame 403e, the user may tap the control 1103, and in response to this user operation, the electronic device may store the image frame 403e as the still photo in the gallery application. The thumbnail of the still photo may be further displayed in the thumbnail display interface shown in FIG. 1.

In a possible implementation, after the electronic device sets the second image frame as the cover picture of the moving photo when the electronic device detects an operation of tapping the fourth control by the user, the method may further include: The electronic device displays a second indicator, where the second indicator is used to indicate that the second image frame is the cover picture of the moving photo. Refer to FIG. 8A. The second indicator may be the indicator 601 in FIG. 8A.

In a possible implementation, the method may further include: The electronic device stops displaying the first indicator or a third indicator, where the third indicator is used to indicate that the first image frame is a cover picture automatically selected by the electronic device for the moving photo but that the first image frame is not currently the cover picture of the moving photo. Refer to FIG. 8B. The third indicator may be the indicator 602 shown in FIG. 8B.

S2903: The electronic device displays a second user interface when the electronic device detects an operation of editing the second image frame by the user, where the second user interface displays a full-size image of an edited the second image frame and a first control, and the second user interface includes the thumbnails of the N image frames, but the thumbnails of the N image frames are in a non-selectable state.

The second user interface may be the user interface 1600 shown in FIG. 21. The full-size image of the edited second image frame may be a preview picture 1601. The first control may a control 1602. The thumbnails of the image frame 403a, the image frame 403b, the image frame 403c, the image frame 403d, and the image frame 403e in the user interface 1600 are in a non-selectable state. That is, the user may not select the thumbnail of any one of the image frames 403a, the image frame 403b, the image frame 403c, the image frame 403d, and the image frame 403e in the user interface 1600.

In a possible implementation, the second user interface further displays the first function option, the first function option is in a second state, and the second state is used to indicate that a photo displayed in the second user interface is the still photo. Refer to FIG. 21. The first function option may be the function option 1105 shown in FIG. 21. In the user interface 1600 shown in FIG. 21, the function option 1105 is in the second state. The second state may be referred to as the state 2.

In a possible implementation, the second user interface further includes a second control. After the electronic device displays a second user interface when the electronic device detects an operation of editing the second image frame by the user, the method may further include: The electronic device stores the edited second image frame as a first still photo in the gallery application when the electronic device detects an operation of tapping the second control by the user. Refer to FIG. 22. The second control may be the control 1103 shown in FIG. 22. After the user taps the control 1103, the electronic device may store the edited image frame 403e, that is, the preview picture 1601, as one still photo in the gallery application.

In a possible implementation, that the electronic device displays a second user interface when the electronic device detects an operation of editing the second image frame by the user includes: The electronic device displays a third user interface when the electronic device detects the operation of editing the second image frame by the user, where the third user interface displays the first function option, the first function option is in the second state, the second state is used to indicate that a photo displayed in the third user interface is the still photo, and the third user interface does not include the thumbnails of the N image frames; and the electronic device displays the second user interface when the electronic device detects an operation of tapping the first function option in the third user interface by the user.

Refer to FIG. 20, the third user interface may be the user interface 1500 shown in FIG. 20. That is, the third user interface is displayed first after the user selects the second image frame in the first user interface for editing, and the electronic device displays the second user interface only after the user taps the first function option in the third user interface.

In a possible implementation, the third user interface further includes a third control, and the method may further include: the electronic device stores the edited second image frame as the first still photo in the gallery application, and displays a full-size image display interface of the gallery application when the electronic device detects an operation of tapping the third control by the user, where the full-size image display interface displays a full-size image of the first still photo. Refer to FIG. 20. The third control may be the control 1401 shown in FIG. 20. When the user taps the control 1401 in FIG. 20, the electronic device may display the user interface 1000 shown in FIG. 27, that is, the full-size image display interface of the gallery application. The user interface 1000 displays a full-size image of the edited image frame 403e, that is, a still photo 1001.

In a possible implementation, after the electronic device stores the edited second image frame as the first still photo in the gallery application, and displays a full-size image display interface of the gallery application when the electronic device detects an operation of tapping the third control by the user, the method may further include: The electronic device displays the thumbnail display interface when the electronic device detects an operation of tapping a return control in the full-size image display interface by the user, where the thumbnail display interface includes a thumbnail of a newly generated first still photo. Refer to FIG. 27, the user may tap a return control 1002 in the user interface 1000. In response to this user operation, the electronic device may display the thumbnail display interface of the gallery application as shown in FIG. 28, that is, the user interface 1700 in FIG. 28. The user interface 1700 displays a thumbnail 1701 of a newly generated still photo.

In a possible implementation, time information of the first still photo stored by the electronic device is consistent with a photographing time of the moving photo; and time information of the second still photo stored by the electronic device is consistent with the photographing time of the moving photo.

In a possible implementation, the thumbnail of the moving photo displayed in the thumbnail display interface of the gallery application includes a first icon, and the first icon is used to indicate that a photo corresponding to the thumbnail is the moving photo.

S2904: The electronic device displays the first user interface again when the electronic device detects an operation of tapping the first control by the user.

Refer to FIG. 23. The user may tap the control 1602 shown in FIG. 23. In response to this user operation, the electronic device displays the prompt box 1604 shown in FIG. 24. After the user taps the control 1607 in the prompt box 1604, as shown in FIG. 25, the electronic device displays the user interface 1100 again.

Through the method for editing a moving photo provided in this embodiment of this application, the user may edit the image frame in the moving photo, and may further reset the editing interface of the image frame to the editing interface of the moving photo after editing one image frame. The user may select another image frame for continuous editing in the editing interface of the moving photo. After the user edits the image frame, the electronic device may further store the edited image frame as the still photo in the gallery.

The following describes an example of an electronic device 10 provided in embodiments of this application.

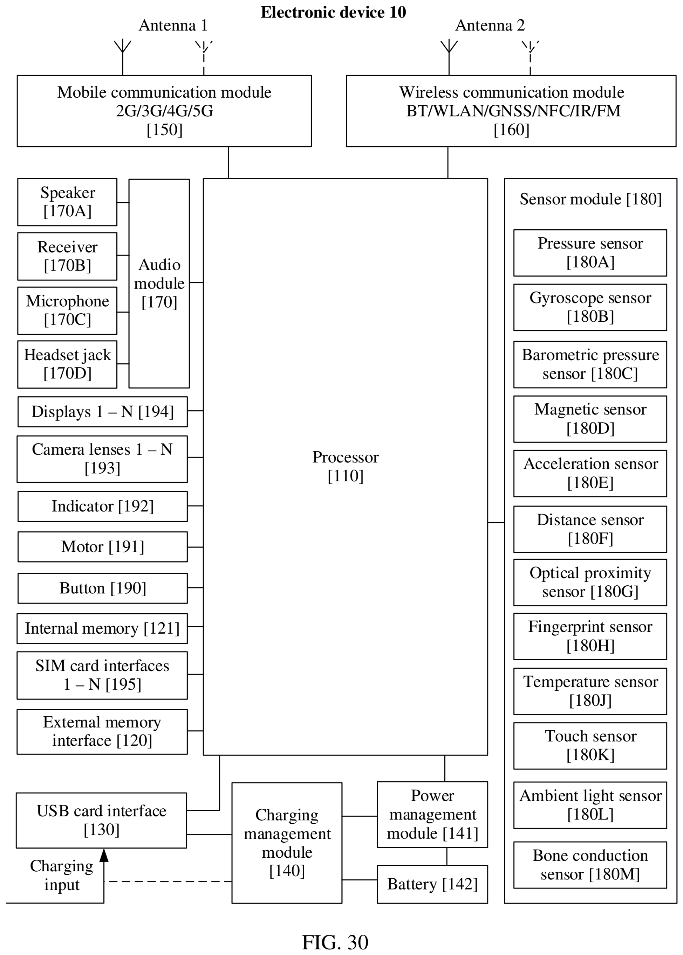

FIG. 30 is a schematic diagram of a structure of an electronic device 10 according to an embodiment of this application.

This embodiment is described in detail below by using the electronic device 10 as an example. It should be understood that the electronic device 10 may have more or fewer components than those shown in the figure, may combine two or more components, or may have a different component configuration. The various components shown in the figure may be implemented in hardware, software, or a combination of hardware and software including one or more signal processing and/or application-specific integrated circuits.

The electronic device 10 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of the present invention does not constitute a specific limitation on the electronic device 10. In some other embodiments of this application, the electronic device 10 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and command center of the electronic device 10. The controller may generate an operation control signal according to instruction operation code and a timing signal, and control obtaining and executing of instructions.

A memory may be further disposed in the processor 110, and is configured to store instructions and data. In some embodiments, the memory of the processor 110 is a cache. The memory may store instructions or data that is just used or used cyclically by the processor 110. If the processor 110 needs to use the instructions or the data again, the processor 110 may directly invoke the instructions or the data from the memory. This avoids repeated accessing and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The I2C interface is a bidirectional synchronous serial bus, including a serial data line (serial data line, SDA) and a serial clock line (serial clock line, SCL). In some embodiments, the processor 110 may include a plurality of I2C buses. The processor 110 may be coupled to the touch sensor 180K, a charger, a flash light, the camera 193, and the like by using different I2C bus interfaces. For example, the processor 110 may be coupled to the touch sensor 180K through an I2C interface, so that the processor 110 communicates with the touch sensor 180K through the I2C bus interface, to implement a touch function of the electronic device 10.

The I2S interface may be configured to perform audio communication. In some embodiments, the processor 110 may include a plurality of I2S buses. The processor 110 may be coupled to the audio module 170 by using the I2S bus, to implement communication between the processor 110 and the audio module 170. In some embodiments, the audio module 170 may transfer an audio signal to the wireless communication module 160 by using the I2S interface, to implement a function of answering a call by using a Bluetooth headset.

The PCM interface may also be configured for audio communication, to sample, quantize, and encode an analog signal. In some embodiments, the audio module 170 and the wireless communication module 160 may be coupled through a PCM bus interface. In some embodiments, the audio module 170 may also transmit an audio signal to the wireless communication module 160 through the PCM interface, to implement the function of answering a call through the Bluetooth headset. Both the I2S interface and the PCM interface may be configured to perform audio communication.

The UART interface is a universal serial data bus used for asynchronous communication. The bus may be a two-way communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 via the UART interface, to implement a function of music playback by using a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device 10. The processor 110 communicates with the display 194 by using the DSI, to implement a display function of the electronic device 10.

The GPIO interface may be configured by software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI interface, or the like.

The SIM interface may be configured to communicate with the SIM card interface 195, to implement a function of transmitting data to an SIM card or reading data from an SIM card.

The USB interface 130 is an interface that complies with a USB standard specification, and may be specifically a mini USB interface, a micro USB interface, a USB Type-C interface, or the like. The USB interface 130 may be configured to be connected to a charger to charge the electronic device 10, or may be used for data transmission between the electronic device 10 and a peripheral device. The interface may alternatively be configured to connect to a headset, to play audio through the headset. The interface may be further configured to be connected to another electronic device such as an AR device.

It may be understood that an interface connection relationship between the modules shown in this embodiment of the present invention is merely an example for description, and does not constitute a limitation on a structure of the electronic device 10. In some other embodiments of this application, the electronic device 10 may also use an interface connection manner different from that in the above embodiment, or use a combination of a plurality of interface connection manners.

The charging management module 140 is configured to receive charging input from the charger. The charger may be a wireless charger or a wired charger.

The power management module 141 is configured to connect to the battery 142, the charging management module 140 and the processor 110. The power management module 141 receives an input from the battery 142 and/or the charging management module 140 and supplies power to the processor 110, the internal memory 121, an external memory, the display 194, the camera 193, the wireless communication module 160, and the like.

A wireless communication function of the electronic device 10 may be implemented via the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 10 may be configured to cover one or more communication frequency bands. Different antennas may be further multiplexed to improve antenna utilization. For example, the antenna 1 may be multiplexed as a diversity antenna of a wireless local area network. In some other embodiments, the antennas may be used in combination with a tuning switch.

The mobile communication module 150 may provide a solution for wireless communication including 2G/3G/4G/5G and the like to be applied to the electronic device 10. The mobile communication module 150 may include at least one filter, a switch, a power amplifier, and a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules of the mobile communication module 150 may be arranged in the processor 110. In some embodiments, at least some of the functional modules of the mobile communication module 150 may be disposed in a same device as at least some of modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the demodulated low-frequency baseband signal to the baseband processor for processing. After being processed by the baseband processor, the low-frequency baseband signal is transmitted to the application processor. The application processor outputs a sound signal by means of an audio device (which is not limited to the speaker 170A, the receiver 170B, and the like), or displays an image or a video by means of the display 194. In some embodiments, the modem processor may be an independent component. In some other embodiments, the modem processor may be independent of the processor 110, and is disposed in a same component as the mobile communication module 150 or another functional module.

The wireless communication module 160 may provide wireless local area networks (wireless local area networks, WLAN) (such as a wireless fidelity (wireless fidelity, Wi-Fi) network), Bluetooth (bluetooth, BT), global navigation satellite system (global navigation satellite system, GNSS), frequency modulation (frequency modulation, FM), near field communication (near field communication, NFC), infrared (infrared, IR), or other wireless communication solutions to be applied to the electronic device 10. The wireless communication module 160 may be one or more components integrating at least one communication processing module. The wireless communication module 160 receives an electromagnetic wave by using the antenna 2, performs frequency modulation on the electromagnetic wave signal and filters the electromagnetic wave signal, and sends a processed signal to the processor 110. The wireless communication module 160 may further receive a to-be-sent signal from the processor 110, perform frequency modulation on and amplify the to-be-sent signal, and convert the to-be-sent signal into an electromagnetic wave by using the antenna 2 for radiation.

In some embodiments, the antenna 1 is coupled to the mobile communication module 150 of the electronic device 10, and the antenna 2 is coupled to the wireless communication module 160, so that the electronic device 10 can communicate with a network and other devices by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, IR, and/or other technologies. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or satellite-based augmentation systems (satellite-based augmentation systems, SBAS).

The electronic device 10 may implement a display function by using the GPU, the display 194, the application processor, and the like. The GPU is a microprocessor for image processing and connects the display 194 to the application processor. The GPU is configured to perform mathematical and geometric computing for graphics rendering. The processor 110 may include one or more GPUs, and the one or more GPUs execute program instructions to generate or change displayed information.

The display 194 is configured to display an image, a video, or the like. The display 194 may include a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini LED, a micro LED, a micro-OLED, quantum dot light emitting diodes (quantum dot light emitting diodes, QLED), or the like. In some embodiments, the electronic device 10 may include 1 or N displays 194. N is a positive integer greater than 1.

The electronic device 10 may implement a shooting function through the ISP, the camera 193, the video encoder and decoder, the GPU, the display 194, the application processor, and the like.

The ISP is used to process data fed back by camera 193. For example, during photographing, a shutter is pressed, and light is transmitted to a photosensitive element of the camera through a lens. An optical signal is converted into an electrical signal. The photosensitive element of the camera lens transmits the electrical signal to the ISP for processing, so that the ISP converts the electrical signal into an image visible to naked eyes. The ISP may further perform algorithm optimization on noise, brightness, and a color of the image. The ISP may further optimize parameters such as exposure and a color temperature of a shooting scenario. In some embodiments, the ISP may be provided in the camera lens 193.

The camera 193 is configured to capture a still image or video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 10 may include 1 or N cameras 193, and N is a positive integer greater than 1.

The digital signal processor is configured to process a digital signal, and may further process another digital signal in addition to the digital image signal. For example, when the electronic device 10 performs frequency selection, the digital signal processor is configured to perform Fourier transform or the like on frequency energy.

The video encoder and decoder are configured to compress or decompress a digital video. The electronic device 10 can support one or more types of video encoders and decoders. In this case, the electronic device 10 may play or record videos in a plurality of coding formats, such as moving picture experts group (moving picture experts group, MPEG)1, MPEG2, MPEG3, and MPEG4.

The NPU is a neural-network (neural-network, NN) computing processor. The NPU quickly processes input information with reference to a structure of a biological neural network, for example, a transfer mode between human brain neurons, and may further continuously perform self-learning. The NPU may be configured to implement an application such as intelligent cognition of the electronic device 10, for example, image recognition, facial recognition, voice recognition, and text understanding.

The external memory interface 120 may be configured to be connected to an external storage card, for example, a micro SD card, to extend a storage capability of the electronic device 10. The external storage card communicates with the processor 110 via the external memory interface 120, to implement a data storage function. For example, files such as music and a video are stored in the external memory card.

The internal memory 121 may be configured to store computer-executable program code, and the computer-executable program code includes instructions. The processor 110 runs the instructions stored in the internal storage 121, to perform various function applications and data processing of the electronic device 10. The internal memory 121 may include a program storage area and a data storage area. The program storage area may store an operating system, an application required by at least one function (for example, a facial recognition function, a fingerprint recognition function, and a mobile payment function), and the like. The data storage area may store data (for example, face information template data and fingerprint information template) created during use of the electronic device 10, and the like. In addition, the internal memory 121 may include a high-speed random access memory, and may further include a nonvolatile memory, for example, at least one magnetic disk storage device, a flash memory, or a universal flash storage (universal flash storage, UFS).

The electronic device 10 may use the audio module 170, the speaker 170A, the receiver 170B, the microphone 170C, the headset jack 170D, the application processor, and the like to implement an audio function, such as music playing or sound recording.

The audio module 170 is configured to convert digital audio information into an analog audio signal output, and also configured to convert an analog audio input into a digital audio signal. The audio module 170 may be further configured to encode and decode audio signals. In some embodiments, the audio module 170 may be disposed in the processor 110, or some functional modules in the audio module 170 may be disposed in the processor 110.

The speaker 170A, also referred to as a "loudspeaker", is configured to convert an audio electrical signal into a sound signal. The electronic device 10 may be used to listen to music or answer a call in a hands-free mode by using the speaker 170A.

The receiver 170B, also referred to as "earpiece", is configured to convert an electrical audio signal into a sound signal. When the electronic device 10 is configured to answer a call or receive voice information, the receiver 170B may be put close to a human ear to receive a voice.

The microphone 170C, also referred to as a "mic" or a "mike", is configured to convert a sound signal into an electrical signal. When making a call or sending speech information, a user may make a sound approaching the microphone 170C through the mouth, to input a sound signal into the microphone 170C. At least one microphone 170C may be disposed in the electronic device 10. In some other embodiments, two microphones 170C may be arranged in the electronic device 10, to acquire a sound signal and implement a noise reduction function. In some other embodiments, three, four, or more microphones 170C may be further arranged in the electronic device 10, to acquire a sound signal, implement noise reduction, recognize a sound source, implement a directional sound recording function, and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be arranged at the display 194. Many types of pressure sensors 180A such as a resistive pressure sensor, an inductive pressure sensor, and a capacitive pressure sensor exist. The capacitive pressure sensor may include at least two parallel plates made of conductive materials. When force is applied onto the pressure sensor 180A, a capacitance between electrodes changes. The electronic device 10 determines a pressure strength based on a change in the capacitance. When a touch operation is performed on the display 194, the electronic device 10 detects intensity of the touch operation according to the pressure sensor 180A. The electronic device 10 may also calculate a touch location based on a detected signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a Messages application icon, an instruction for viewing a short message is executed. When a touch operation whose touch operation intensity is greater than or equal to a first pressure threshold is performed on a Messages application icon, an instruction for creating a short message is executed.

The gyroscope sensor 180B may be configured to determine a motion posture of the electronic device 10. In some embodiments, an angular velocity of the electronic device 10 around three axes (that is, x, y, and z axes) may be determined through the gyroscope sensor 180B. The gyroscope sensor 180B may be configured to image stabilization during photographing. For example, when the shutter is pressed, the gyroscope sensor 180B detects an angle at which the electronic device 10 jitters, and calculates, based on the angle, a distance for which a lens module needs to compensate, and allows the lens to cancel the jitter of the electronic device 10 through reverse motion, thereby preventing jitter. The gyroscope sensor 180B may be further used in navigation and a motion sensing game scene.

The barometric pressure sensor 180C is configured to measure an air pressure. In some embodiments, the electronic device 10 calculates an altitude by using a barometric pressure value measured by the barometric pressure sensor 180C, to assist in positioning and navigation.

The magnetic sensor 180D may include a Hall sensor. The electronic device 10 may detect an opening state or a closing state of a flip leather case by using the magnetic sensor 180D. In some embodiments, when the electronic device 10 is a flip phone, the electronic device 10 may detect opening and closing of a flip cover based on the magnetic sensor 180D. Further, features such as automatic unlocking of the flip cover are set based on the detected opening and closing states of the leather case or opening and closing states of the flip cover.

The acceleration sensor 180E may detect an acceleration value of the electronic device 10 in all directions (generally three axes). When the electronic device 10 is stationary, a magnitude and a direction of gravity may be measured. The acceleration sensor may be further configured to recognize a posture of the electronic device, and is used in screen switching between a landscape mode and a portrait mode, a pedometer, or another application.

The distance sensor 180F is configured to measure a distance. The electronic device 10 may measure a distance through infrared light or a laser. In some embodiments, in a photographing scene, the electronic device 10 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 10 emits infrared light outwards by using the light-emitting diode. The electronic device 10 detects reflected infrared light from a nearby object by using the photodiode. When sufficient reflected light is detected, it may be determined that there exists an object near the electronic device 10. When insufficient reflected light is detected, the electronic device 10 may determine that there exists no object near the electronic device 10. The electronic device 10 may detect, by using the optical proximity sensor 180G, that a user holds the electronic device 10 to approach to an ear for a call, so as to automatically turn off screen to save power. The optical proximity sensor 180G may be further configured to automatically unlock and lock the screen in a leather case mode and a pocket mode.

The ambient light sensor 180L is configured to sense ambient light brightness. The electronic device 10 may adaptively adjust brightness of the display 194 based on the perceived ambient light brightness. The ambient light sensor 180L may be further configured to automatically adjust white balance during photographing. The ambient light sensor 180L may further cooperate with the optical proximity sensor 180G to detect whether the electronic device 10 is in a pocket to prevent a false touch.

The fingerprint sensor 180H is configured to collect a fingerprint. The electronic device 10 may implement fingerprint unlock, application lock accessing, fingerprint photo taking, fingerprint call answering, and the like by using a feature of the acquired fingerprint.

The temperature sensor 180J is configured to detect a temperature. In some embodiments, the electronic device 10 executes a temperature processing policy by using a temperature detected by the temperature sensor 180J. For example, when a temperature reported by the temperature sensor 180J exceeds a threshold, the electronic device 10 reduces performance of a processor near the temperature sensor 180J, to reduce power consumption and implement heat protection. In some other embodiments, when the temperature is lower than another threshold, the electronic device 10 heats the battery 142, to avoid an abnormal shutdown of the electronic device 10 caused by low temperature. In some other embodiments, when the temperature is lower than still another threshold, the electronic device 10 boosts an output voltage of the battery 142, to avoid abnormal power-off caused by a low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on the surface of the electronic device 10 at a position different from that of the display 194.

The button 190 includes a power on/off button, a volume button, and the like. The button 190 may be a mechanical button, or may be a touch button. The electronic device 10 may receive a button input and generate a button signal input related to a user setting and function control of the electronic device 10.

The motor 191 may generate a vibration prompt. The motor 191 may be configured to provide a vibration prompt for an incoming call, and may be further configured to provide vibration feedback for a touch. For example, touch operations performed on different applications (for example, photographing and audio playing) may correspond to different vibration feedback effects. For touch operations performed in different regions of the display 194, the motor 191 may also correspond to different vibration feedback effects. Different application scenarios (for example, a time reminder, information receiving, an alarm clock, and a game) may also correspond to different vibration feedback effects. Touch vibration feedback effect may be further customized.

The indicator 192 may be an indicator light that may be configured to indicate a charging state and a power change, or may also be configured to indicate a message, a missed call, a notification, and the like.

The SIM card interface 195 is configured to connect a SIM card. The SIM card may be inserted into the SIM card interface 195 or unplugged from the SIM card interface 195, to come into contact with or be separated from the electronic device 10. The electronic device 10 may support 1 or N SIM card interfaces, N being a positive integer greater than 1. The SIM card interface 195 may support a nano SIM card, a micro SIM card, a SIM card, or the like. A plurality of cards may be inserted into the same SIM card interface 195 together. The plurality of cards may be of a same type or may not be of a same type. The SIM card interface 195 may be further compatible with different types of SIM cards. The SIM card interface 195 is also compatible with an external memory card. The electronic device 10 interacts with a network through a SIM card, to implement functions such as a call and data communication.

The foregoing descriptions and embodiments are merely intended to describe the technical solutions of this application, rather than limit this application. Although this application is described in detail with reference to foregoing embodiments, a person of ordinary skill in the art should understand that modifications can still be made to the technical solutions described in foregoing embodiments or equivalent replacements can be made to some technical features thereof, without departing from the scope of the technical solutions of embodiments of this application.

According to the context, the term "when..." used in the foregoing embodiments may be interpreted as a meaning of "if...", "after...", "in response to determining...", or "in response to detecting...". Similarly, according to the context, the phrase "when it is determined that..." or "if (a stated condition or event) is detected" may be interpreted as a meaning of "when it is determined that...", "in response to determining...", "when (a stated condition or event) is detected", or "in response to detecting (a stated condition or event)".

All or some of the foregoing embodiments may be implemented by using software, hardware, firmware, or any combination thereof. When software is used for implementation, the implementation can be performed in a form of a computer program product in whole or in part. The computer program product includes one or more computer instructions. When the computer program instructions are loaded and performed on a computer, all or some of flows or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, coaxial-cable, optical-fiber, or digital-subscriber-line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive), or the like.

A person of ordinary skill in the art may understand that all or some of the procedures of the methods in embodiments may be implemented by a computer program instructing relevant hardware. The program may be stored in a computer-readable storage medium. When the program is executed, the procedures in the method embodiments may be performed. The storage medium includes: any medium that can store program code, such as a ROM, a RAM, a magnetic disk, and an optical disk.

## Claims

1. A method for editing a moving photo, comprising:
displaying, by an electronic device, a first user interface, wherein the first user interface displays thumbnails of N image frames and a full-size image of a first image frame that are comprised in a moving photo, the first image frame is an image frame in the N image frames, and the thumbnails of the N image frames are in a selectable state;
refreshing, by the electronic device, the full-size image of the first image frame to display as a full-size image of a second image frame when the electronic device detects an operation of selecting a thumbnail of the second image frame from the thumbnails of the N image frames by a user;
displaying, by the electronic device, a second user interface when the electronic device detects an operation of editing the second image frame by the user, wherein the second user interface displays a full-size image of an edited second image frame and a first control, and the second user interface comprises the thumbnails of the N image frames, but the thumbnails of the N image frames are in a non-selectable state; and
displaying, by the electronic device, the first user interface again when the electronic device detects an operation of tapping the first control by the user.

2. The method according to claim 1, wherein before the displaying, by an electronic device, a first user interface, the method further comprises:
displaying, by the electronic device, a thumbnail display interface of a gallery application, wherein the thumbnail display interface is configured to display thumbnails of a plurality of photos stored in the gallery application, and the thumbnails of the plurality of photos comprise a thumbnail of the moving photo; and
displaying, by the electronic device, a full-size image display interface when the electronic device detects an operation of tapping the thumbnail of the moving photo by the user, wherein the full-size image display interface displays a full-size image of a cover picture of the moving photo; and
the displaying, by an electronic device, a first user interface comprises:
displaying, by the electronic device, the first user interface when the electronic device detects an operation of displaying the moving photo in the full-size image display interface by the user.

3. The method according to claim 2, wherein before the displaying, by an electronic device, a first user interface, the method further comprises:
storing, by the electronic device as a video, at least one image frame cached before a moment at which a shutter operation is performed, and storing, as videos, at least one image frame cached at the moment at which the shutter operation is performed and at least one image frame cached after the moment at which the shutter operation is performed;
storing, by the electronic device as a still photo, an image frame captured at the moment at which the shutter operation is performed; and
generating, by the electronic device, the moving photo based on the video and the still photo, wherein the still photo is the cover picture of the moving photo.

4. The method according to any one of claims 1 to 3, wherein the first image frame is an image frame corresponding to the cover picture of the moving photo, or an image frame previously selected by the user for editing.

5. The method according to any one of claims 1 to 4, wherein the first user interface further displays a first function option, the first function option is in a first state, and the first state is used to indicate that a photo displayed in the first user interface is the moving photo; and
the second user interface further displays the first function option, the first function option is in a second state, and the second state is used to indicate that a photo displayed in the second user interface is the still photo.

6. The method according to claim 5, wherein the displaying, by the electronic device, a second user interface when the electronic device detects an operation of editing the second image frame by the user comprises:
displaying, by the electronic device, a third user interface when the electronic device detects the operation of editing the second image frame by the user, wherein the third user interface displays the first function option, the first function option is in the second state, the second state is used to indicate that a photo displayed in the third user interface is the still photo, and the third user interface does not comprise the thumbnails of the N image frames; and
displaying, by the electronic device, the second user interface when the electronic device detects an operation of tapping the first function option in the third user interface by the user.

7. The method according to any one of claims 1 to 6, wherein the second user interface further comprises a second control, and after the displaying, by the electronic device, a second user interface when the electronic device detects an operation of editing the second image frame by the user, the method further comprises:
storing, by the electronic device, the edited second image frame as a first still photo in the gallery application when the electronic device detects an operation of tapping the second control by the user.

8. The method according to claim 6, wherein the third user interface further comprises a third control, and the method further comprises:
storing, by the electronic device, the edited second image frame as a first still photo in the gallery application, and displaying a full-size image display interface of the gallery application when the electronic device detects an operation of tapping the third control by the user, wherein the full-size image display interface displays a full-size image of the first still photo.

9. The method according to claim 8, wherein after the storing, by the electronic device, the edited second image frame as a first still photo in the gallery application, and displaying a full-size image display interface of the gallery application when the electronic device detects an operation of tapping the third control by the user, the method further comprises:
displaying, by the electronic device, the thumbnail display interface when the electronic device detects an operation of tapping a return control in the full-size image display interface by the user, wherein the thumbnail display interface comprises a thumbnail of a newly generated first still photo.

10. The method according to any one of claims 1 to 9, wherein the first user interface further comprises a fourth control and a fifth control, the fourth control is configured to set an image frame selected by the user from the N image frames as the cover picture of the moving photo, and the fifth control is configured to store the image frame selected by the user from the N image frames as a still photo in the gallery application.

11. The method according to claim 10, wherein after the refreshing, by the electronic device, the full-size image of the first image frame to display as a full-size image of a second image frame when the electronic device detects an operation of selecting a thumbnail of the second image frame from the thumbnails of the N image frames by a user, the method further comprises:
setting, by the electronic device, the second image frame as the cover picture of the moving photo when the electronic device detects an operation of tapping the fourth control by the user; and
displaying, by the electronic device, the thumbnail display interface of the gallery application again, wherein a thumbnail of the moving photo with an updated cover photo is displayed in the thumbnail display interface.

12. The method according to claim 10, wherein after the refreshing, by the electronic device, the full-size image of the first image frame to display as a full-size image of a second image frame when the electronic device detects an operation of selecting a thumbnail of the second image frame from the thumbnails of the N image frames by a user, the method further comprises:
storing, by the electronic device, the second image frame as a second still photo in the gallery application when the electronic device detects an operation of tapping the fifth control by the user.

13. The method according to any one of claims 10 to 12, wherein the method further comprises:
setting, by the electronic device, the fourth control to be in an unavailable state when the electronic device detects that the image frame selected by the user is the cover picture of the moving photo.

14. The method according to any one of claims 1 to 13, wherein the first user interface displays a first indicator, and the first indicator is used to indicate that the first image frame is the cover picture of the moving photo.

15. The method according to claim 4, wherein after setting, by the electronic device, the second image frame as the cover picture of the moving photo when the electronic device detects an operation of tapping the fourth control by the user, the method further comprises:
displaying, by the electronic device, a second indicator, wherein the second indicator is used to indicate that the second image frame is the cover picture of the moving photo.

16. The method according to claim 15, wherein the method further comprises:
stopping, by the electronic device, displaying the first indicator or a third indicator, wherein the third indicator is used to indicate that the first image frame is a cover picture automatically selected by the electronic device for the moving photo but that the first image frame is not currently the cover picture of the moving photo.

17. The method according to any one of claims 1 to 16, wherein time information of the first still photo stored by the electronic device is consistent with a photographing time of the moving photo; and
time information of the second still photo stored by the electronic device is consistent with the photographing time of the moving photo.

18. The method according to any one of claims 1 to 17, wherein the thumbnail of the moving photo displayed in the thumbnail display interface of the gallery application comprises a first icon, and the first icon is used to indicate that a photo corresponding to the thumbnail is the moving photo.

19. The method according to any one of claims 1 to 18, wherein the thumbnails of the N image frames are arranged in the first user interface in a photographing time sequence of the N image frames.

20. An electronic device, comprising one or more camera lenses, one or more processors, and one or more memories, wherein the one or more camera lenses and the one or more memories are coupled to the one or more processors, the one or more memories are configured to store computer program code, the computer program code comprises computer instructions, and when the one or more processors execute the computer instructions, the method according to any one of claims 1 to 19 is enabled to be performed.

21. A chip system, wherein the chip system is used in an electronic device, the chip system comprises one or more processors, and the processor is configured to invoke computer instructions, to perform the method according to any one of claims 1 to 19.

22. A computer-readable storage medium, comprising instructions, wherein when the instructions are run on an electronic device, the method according to any one of claims 1 to 19 is enabled to be performed.
